# EUROPEAN PATENT APPLICATION

(11) **EP 4 478 317 A1**
(43) Date of publication of application: **18.12.2024**
(21) Application number: 22926036.9
(22) Date of filing: 06.10.2022
(51) Int. Cl.: G08B 21/02, G01S 19/43

(54) **INFORMATION PROCESSING APPARATUS, TERMINAL, INFORMATION PROCESSING METHOD, WARNING METHOD, AND INFORMATION PROCESSING SYSTEM**

(30) Priority: 10.02.2022 JP 2022019897
(71) Applicant: Panasonic Intellectual Property Management Co., Ltd., Osaka-shi, Osaka 540-6207 (JP)
(72) Inventor: YAMAZAKI, Yasuhisa, Kadoma-shi, Osaka 571-0057 (JP); SHIBATA, Jun, Kadoma-shi, Osaka 571-0057 (JP); YOSHINO, Kazuyuki, Kadoma-shi, Osaka 571-0057 (JP); HORIIKE, Naoto, Kadoma-shi, Osaka 571-0057 (JP); KAWAI, Yoshihito, Kadoma-shi, Osaka 571-0057 (JP); SHIROSAKI, Yoshimasa, Kadoma-shi, Osaka 571-0057 (JP); TSUNOBUCHI, Atsuki, Kadoma-shi, Osaka 571-0057 (JP); GEJOH, Noriyuki, Kadoma-shi, Osaka 571-0057 (JP); SUDO, Hiroaki, Kadoma-shi, Osaka 571-0057 (JP); KOSAKA, Kazuhiro, Kadoma-shi, Osaka 571-0057 (JP)
(74) Representative: Eisenführ Speiser
(86) International application number: PCT/JP2022/037475
(87) International publication number: WO 2023/153019

(57) **Abstract**

This information processing apparatus comprises: an acquisition unit that acquires the number of terminals present in a prescribed area, or the weights of moving bodies associated with the terminals present in the prescribed area; and a processing unit that determines, according to whether at least one of the number of terminals and the weights of the moving bodies exceeds a prescribed threshold, whether to generate a geofence.

## Description

### Technical Field

The present disclosure relates to an information processing apparatus, a terminal, an information processing method, an alarm method, and an information processing system.

### Background Art

There are techniques for setting a specific area as a "geofence", which refers to an area defined by a virtual boundary, and causing an event to occur when a mobile object enters or exits the geofence. For example, there are techniques for outputting an alarm for entry or exit of a mobile object into or from a geofence.

PTL 1, for example, discloses a technique for outputting an alarm instruction when there is at least one worker who is a target of approach notification in an approach notification area, which is an example of the geofence, and not outputting an alarm instruction when there is no such worker. PTL 1 also discloses that a type of alarm is changed stepwise at this time in accordance with information such as the number of workers detected in the approach notification area and distances to a hydraulic excavator.

### Citation List

### Patent Literature

PTL 1
WO 2019/117268

### Summary of Invention

Whether to provide a geofence is set in advance in the example of the related art. In order to newly set or cancel a geofence, therefore, a manager or another person needs to manually perform the operation. As a result, if the manager or another person does not complete the operation in time, an alarm might be output even when the alarm is no longer necessary or an alarm might not be output even when the alarm is necessary. For example, even when a construction vehicle or a worker has moved and there is no longer danger of a collision with something or someone else, an alarm is undesirably output until the manager cancels the geofence. In addition, even when construction vehicles or workers suddenly gather and there is increased danger of a collision, an alarm might undesirably not be output until the manager sets a geofence in that area. Construction of a mechanism for setting or cancelling a geofence in accordance with a situation, therefore, is required.

Non-limiting embodiments of the present disclosure contribute to providing an information processing apparatus, a terminal, an information processing method, an alarm method, and an information processing system capable of setting or cancelling a geofence, which provides a trigger for an appropriate alarm or the like for a mobile object in accordance with a situation of the mobile object or the like.

An information processing apparatus according to one example of the present disclosure includes: an obtainer that obtains a number of terminals in a certain area or weights of mobile objects associated with terminals in the certain area; and a processor that determines whether to generate a geofence in accordance with whether at least one of the number of terminals and the weights of the mobile objects exceeds a certain threshold.

A terminal according to one example of the present disclosure includes: a communicator; and an alarmer, in which: the communicator receives information indicating that the terminal has entered a geofence set based on a number of terminals in a certain area or weights of mobile objects associated with the terminals in the certain area, and the alarmer outputs an alarm when the information is received.

An information processing method according to one example of the present disclosure includes: obtaining, by an information processing apparatus, a number of terminals in a certain area or weights of mobile objects associated with the terminals in the certain area; and determining, by the information processing apparatus, whether to generate a geofence in accordance with whether at least one of the number of terminals and the weights of the mobile objects exceeds a certain threshold.

An alarm method according to one example of the present disclosure includes: receiving, by a terminal, information indicating that the terminal has entered a geofence set based on a number of terminals in a certain area or weights of mobile objects associated with the terminals in the certain area; and outputting, by the terminal, an alarm when the information is received.

An information processing system according to one example of the present disclosure includes: a plurality of terminals, in which: the information processing system obtains a number of terminals in a certain area and weights of mobile objects associated with the terminals in the certain area and determines whether to generate a geofence in accordance with whether at least one of the number of terminals and the weights of the mobile objects exceeds a certain threshold.

It should be noted that general or specific embodiments may be implemented as a system, an apparatus, a method, an integrated circuit, a computer program, a storage medium, or any selective combination thereof.

According to an embodiment of the present disclosure, whether to set a geofence is switched in accordance with the number of terminals or weights of mobile objects (e.g., workers and construction vehicles associated with terminals) in a region that is a candidate where a geofence is to be set (generated). As a result, since a geofence can be set or cancelled in accordance with an actual degree of danger, a geofence can be appropriately set in accordance with an actual condition.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 is a diagram illustrating an example of an alarm system according to Embodiment 1 of the present disclosure;
FIG. 2 is a diagram illustrating an example of configuration of a positioning terminal according to Embodiment 1;
FIG. 3 is a diagram illustrating an example of configuration of a host server according to Embodiment 1;
FIG. 4 is a diagram illustrating an example of operation of the positioning terminal according to Embodiment 1;
FIG. 5 is a diagram illustrating an example of operation of the host server according to Embodiment 1;
FIG. 6A is a diagram illustrating another example of the operation of the host server according to Embodiment 1;
FIG. 6B is another diagram illustrating the other example of the operation of the host server according to Embodiment 1;
FIG. 6C is another diagram illustrating the other example of the operation of the host server according to Embodiment 1;
FIG. 7A is a diagram illustrating another example of the operation of the host server according to Embodiment 1;
FIG. 7B is another diagram illustrating the other example of the operation of the host server according to Embodiment 1;
FIG. 7C is another diagram illustrating the other example of the operation of the host server according to Embodiment 1;
FIG. 8 is a diagram illustrating an example of an alarm system according to Embodiment 2 of the present disclosure;
FIG. 9 is a diagram illustrating an example of configuration of a positioning terminal according to Embodiment 2;
FIG. 10 is a diagram illustrating an example of configuration of a host server according to Embodiment 2;
FIG. 11 is a diagram illustrating an example of operation of the positioning terminal according to Embodiment 2;
FIG. 12A is a diagram illustrating an example of operation of the host server according to Embodiment 2;
FIG. 12B is another diagram illustrating the example of the operation of the host server according to Embodiment 2;
FIG. 12C is another diagram illustrating the example of the operation of the host server according to Embodiment 2;
FIG. 13A is a diagram illustrating another example of the operation of the host server according to Embodiment 2;
FIG. 13B is another diagram illustrating the other example of the operation of the host server according to Embodiment 2; and
FIG. 13C is another diagram illustrating the other example of the operation of the host server according to Embodiment 2.

### Description of Embodiments

Hereinafter, an embodiment of the present disclosure will be described in detail with reference to the accompanying drawings as appropriate. Having said that, a detailed description more than necessary may be omitted, such as a detailed description of an already well-known matter and a duplicated description for a substantially identical configuration, to avoid the following description becoming unnecessarily redundant and to facilitate understanding by those skilled in the art.

Note that, the accompanying drawings and the following description are provided for those skilled in the art to sufficiently understand the present disclosure, and are not intended to limit the subject matter described in the claims.

### (Embodiment 1)

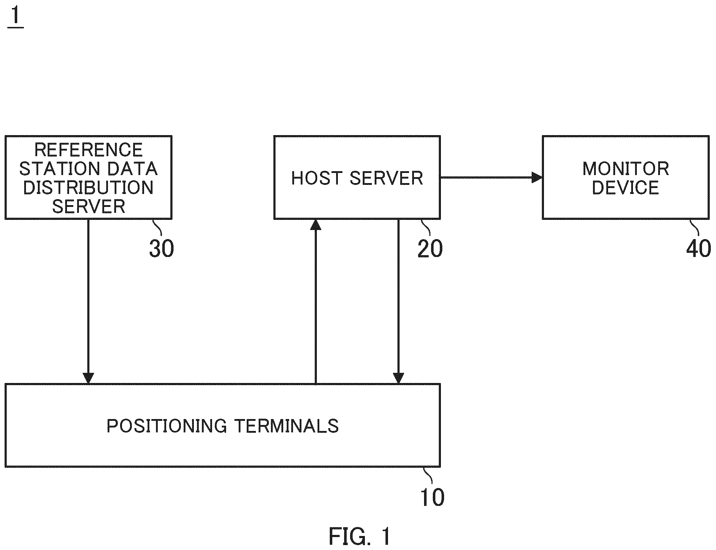

FIG. 1 is a diagram illustrating an example of alarm system 1 according to Embodiment 1 of the present disclosure. In an example of a scenario where alarm system 1 is used, workers or construction vehicles (an example of work vehicles) at a work site enter or approach a dangerous area (i.e., a geofence). The dangerous area may also be referred to as a restricted area. Automatic setting of a dangerous area and entry and approach to the dangerous area will be described hereinafter while taking such a scenario as an example.

As illustrated in FIG. 1, alarm system 1 includes positioning terminals 10, host server 20, reference station data distribution server 30, and monitor device 40. Alarm system 1 may also be referred to as an information processing system or the like.

When a worker carries (possesses, owns) positioning terminal 10, positioning terminal 10 may be, for example, a terminal dedicated to positioning or a wireless terminal such as a mobile phone, a smartphone, a tablet, or a wearable device (e.g., includes a wristwatch (or wristband or ring) terminal), a head-mounted display (or glasses or goggles) terminal, an earphone terminal, a clothes terminal, a socks terminal, and the like). Positioning terminal 10 may be mounted on a construction vehicle as, for example, a terminal dedicated to positioning or a wireless terminal having a positioning function, such as a personal computer, a server computer, a smartphone, or a tablet. Positioning terminal 10 may be referred to as an alarm apparatus or the like. Positioning terminal 10 is an example of a terminal, a first terminal, a second terminal, or an information processing apparatus (corresponds to representative positioning terminal 10, which will be described later) in the present disclosure.

There may be a plurality of positioning terminals 10 in alarm system 1. For example, each of two or more of the plurality of positioning terminals 10 may be carried by and associated with one of two or more workers, and each of remaining ones of the plurality of positioning terminals 10 may be mounted on and associated with one of construction vehicles.

Positioning terminal 10 may access a network including a mobile communication network using a communication method such as LTE (long-term evolution), 5G, Beyond 5G, 6G, Wi-Fi (registered trademark), WiGig (registered trademark), WiMAX (registered trademark), or the like and connect to host server 20 and reference station data distribution server 30 over the network.

Positioning terminal 10 receives radio waves (may also be referred to as a "satellite signal" or a "positioning signal") transmitted from a GNSS (global navigation satellite system) satellite (not illustrated) and generates positioning data regarding positioning terminal 10 (may also be referred to as "positioning terminal positioning data" or "positioning terminal data") using the received satellite signal. Positioning terminal 10 receives, from reference station data distribution server 30, correction data for performing RTK (real-time kinematic) processing and measuring a position thereof (positioning of positioning terminal 10).

Positioning terminal 10 measures the position thereof (also velocity and acceleration thereof depending on the case) by performing RTK processing using the positioning terminal positioning data and the correction data. The position may also be referred to as coordinates (on Earth). The coordinates may be, for example, three-dimensional coordinates including latitude, longitude, and altitude or two-dimensional coordinates represented by two of latitude, longitude, and altitude (e.g., latitude and longitude). It is assumed in the following description that coordinates are two-dimensional coordinates represented by latitude and longitude. An expression "measure a position" may be replaced by "determine a position (or coordinates)", "obtain a position (or coordinates)", "estimate a position (or coordinates)", "detect a position (or coordinates)", "find a position (or coordinates)", "calculate a position (or coordinates)", or "derive a position (or coordinates)", instead. Details of the positioning based on RTK processing will be described later. Accurate positional information or the like can thus be obtained through RTK processing.

Positioning terminal 10 transmits a positioning result obtained as a result of the positioning to host server 20. Positioning terminal 10 receives, from host server 20, an alarm output instruction for notifying of occurrence of entry or approach (may be referred to as an "alarm event") of positioning terminal 10 to a dangerous area. The alarm output instruction may be expressed as a signal for causing positioning terminal 10 to output an alarm.

Positioning terminal 10 outputs an alarm for, for example, a worker who is associated therewith (a worker carrying positioning terminal 10) or a worker who is driving a construction vehicle associated with positioning terminal 10 (a construction vehicle on which positioning terminal 10 is mounted) in accordance with an alarm output instruction.

Host server 20 may be, for example, one or more server computers. Host server 20 may also be referred to as a cloud server. Host server 20 is an example of the information processing apparatus in the present disclosure.

When a congestion detection target area is set, for example, host server 20 automatically generates and sets a dangerous area, which is a circular area centered on a position (coordinates) of positioning terminal 10 in the congestion detection target area and having a certain radius (equals to a congestion determination distance that will be described later) in accordance with a condition for determining whether a congested state, which will be described later, has been established. When an overweight detection target area is set, for example, host server 20 automatically sets the overweight detection target area as a dangerous area in accordance with a condition for determining whether an overweight state has been established. Here, the overweight state is a type of congested state, which will be described later, and especially refers to a state determined on the basis of weight, unless otherwise noted. The overweight detection target area may also be referred to as a dangerous area candidate. Shapes of a congestion detection target area, an overweight detection target area, and a dangerous area include a perfect circle, an oval, a rectangle, and the like, for example, but are not limited to these. In the following description, shapes of an overweight detection target area and a dangerous area are assumed to be perfect circles as an example.

Host server 20 receives positioning results transmitted from positioning terminals 10. Host server 20 determines, on the basis of a set dangerous area, a received positioning result, and the like, entry and approach of positioning terminal 10 carried by a worker or mounted on a construction vehicle to the dangerous area (i.e., detects an alarm event). When detecting an alarm event, host server 20 generates an alarm output instruction for notifying the worker associated with positioning terminal 10 (and a worker driving the construction vehicle depending on the case) of occurrence of the alarm event and transmits the alarm output instruction to positioning terminal 10.

Host server 20 may manage the plurality of positioning terminals 10 by associating identification information regarding positioning terminals 10 with identification information regarding workers or construction vehicles in a table format or a list format, for example, and storing this table or list in a storage device included in host server 20.

Host server 20 transmits, to monitor device 40, information such as a set dangerous area, a received positioning result, and positioning terminal 10 to which an alarm output instruction is to be transmitted to display the information.

Reference station data distribution server 30 transmits, to positioning terminal 10, correction data for performing RTK processing and measuring a position of positioning terminal 10. The correction data may be generated by a reference station (not illustrated) and transmitted to reference station data distribution server 30. The reference station may generate positioning data regarding the reference station (may also be referred to as "correction data", "reference station positioning data", or "reference station data") on the basis of a satellite signal transmitted from a GNSS satellite. The reference station may periodically (e.g., a transmission period on the order of seconds or shorter) transmit the generated correction data to reference station data distribution server 30.

Monitor device 40 receives, from host server 20, information such as a dangerous area, a positioning result, and positioning terminal 10 to which an alarm output instruction is to be transmitted. Monitor device 40 displays the information on a display included therein. Monitor device 40 may be included in host server 20 or a computer used by a user such as the operation manager, or may be mounted on a construction vehicle.

### <Configuration of Positioning Terminal>

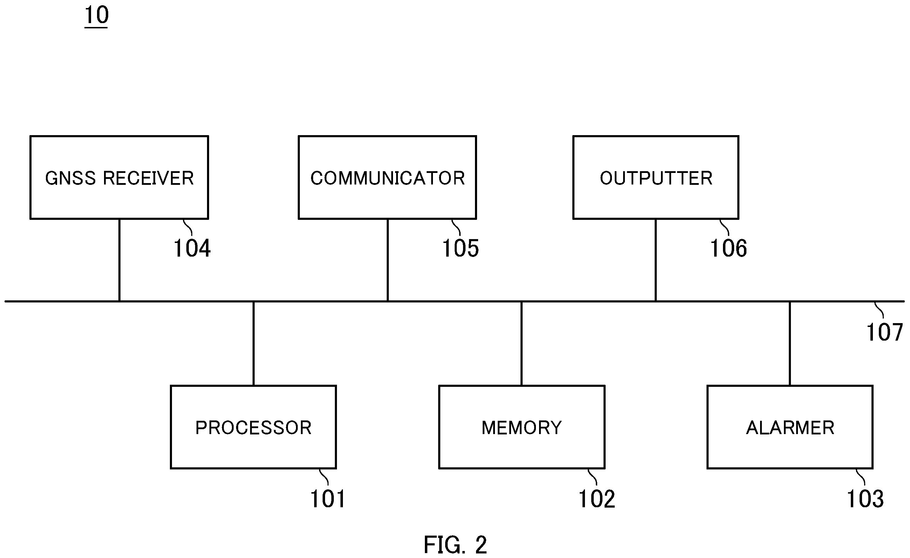

FIG. 2 is a block diagram illustrating an example of configuration of positioning terminal 10 according to Embodiment 1. As illustrated in FIG. 2, positioning terminal 10 includes processor 101, memory 102, alarm 103, GNSS receiver 104, communicator 105, outputter 106, and bus 107.

Processor 101 may be achieved by a processing device such as a central processing unit (CPU). Processor 101 controls overall operation (e.g., the other elements of positioning terminal 10) of positioning terminal 10. Processor 101 may also be referred to as a computer, a regulator, a calculator, a controller, or the like.

Processor 101 generates positioning terminal positioning data using a satellite signal from a GNSS satellite. The positioning terminal positioning data may be generated by GNSS receiver 104 and output to processor 101, instead.

Processor 101 measures (determines) a position, velocity, acceleration, and a travel direction of positioning terminal 10 by performing RTK processing using the positioning terminal positioning data and correction data from reference station data distribution server 30. When positioning terminal 10 includes a velocity sensor and an acceleration sensor, the velocity sensor and the acceleration sensor may measure the velocity and the acceleration of positioning terminal 10, respectively, and processor 101 may obtain the velocity and the acceleration from the velocity sensor and the acceleration sensor, respectively, and determine the velocity and the acceleration of positioning terminal 10. Such measurement may be performed when the satellite signal is received from the GNSS satellite or at certain time intervals such as every 0.2 second, every 0.5 second, or every 1 second. Processor 101 outputs (i.e., stores) a positioning result obtained as a result of the positioning to memory 102. In the present disclosure, the positioning result relating to positioning terminal 10 includes the position (latitude and longitude), the velocity, and the travel direction of positioning terminal 10.

Each time the measurement is performed, processor 101 transmits a positioning result obtained as a result of positioning to host server 20 through communicator 105. Processor 101 receives an alarm output instruction from host server 20 through communicator 105.

Upon receiving the alarm output instruction from host server 20, processor 101 controls alarmer 103 such that alarmer 103 outputs an alarm corresponding to the alarm output instruction. As described later, in an example, an alarm output instruction includes an alarm output instruction to cause positioning terminal 10 to output an alarm for entry and approach thereof into a dangerous area.

Memory 102 may be, for example, one or more of a DRAM (dynamic random-access memory), an HDD (hard disk drive), an SSD (solid-state drive), and the like. Memory 102 obtains various pieces of information from the other elements and temporarily or permanently holds the various pieces of information. Memory 102 is a general term for a so-called primary storage device and a secondary storage device. A plurality of memories 102 may be physically provided, instead.

Memory 102 stores, for example, programs to be executed by processor 101 to operate positioning terminal 10, data necessary for positioning terminal 10 to operate, data generated by processor 101, satellite signals transmitted from a GNSS satellite, positioning terminal positioning data, correction data transmitted from reference station data distribution server 30, positioning results obtained by processor 101, alarm output instructions transmitted from host server 20, and the like.

Alarmer 103 outputs an alarm for entry into a dangerous area. Alarmer 103 also outputs an alarm for approach to a dangerous area. For example, alarmer 103 may output an alarm in a different style in accordance with a predicted time at which positioning terminal 10 will enter a dangerous area. Alarmer 103 may output an alarm by, for example, ringing a buzzer, vibrating positioning terminal 10, outputting an alarm sound through outputter 106, or performing any combination of these.

GNSS receiver 104 receives a satellite signal transmitted from a GNSS satellite. GNSS receiver 104 may generate positioning terminal positioning data regarding positioning terminal 10 using the received satellite signal. GNSS receiver 104 outputs the satellite signal to processor 101 and memory 102. After generating positioning terminal positioning data, GNSS receiver 104 outputs the positioning terminal positioning data to processor 101 and memory 102.

Communicator 105 may be achieved, for example, using a communication interface capable of communicating with a communication network such as a cellular communication network. Communicator 105 communicates with external devices through a communication path. The devices with which communicator 105 communicates (communication targets) include, for example, host server 20 and reference station data distribution server 30.

Communicator 105 receives correction data transmitted from reference station data distribution server 30. Communicator 105 receives an alarm output instruction transmitted from host server 20. Communicator 105 outputs the received correction data and alarm output instruction to processor 101 and memory 102. Communicator 105 transmits a positioning result obtained as a result of positioning to host server 20.

Outputter 106 may be achieved, for example, using an output interface such as a display. In addition, or alternatively, outputter 106 may be achieved using an output interface for sound, vibration, or the like. Outputter 106 presents or provides information for the outside. The information presented or provided by outputter 106 includes a positioning result obtained by processor 101 and the like.

Processor 101, memory 102, alarm 103, GNSS receiver 104, communicator 105, and outputter 106 are communicably connected to one another by bus 107.

The above configuration of positioning terminal 10 is an example. Some of the components of positioning terminal 10 may be integrated together. Some of the components of positioning terminal 10 may be divided into a plurality of elements. Some of the components of positioning terminal 10 may be omitted. Other elements may be added to positioning terminal 10. For example, an inputter, which may be a touch display, a keyboard, a mouse, or the like, may be added to positioning terminal 10.

### [Positioning Data]

Next, positioning data will be described. Positioning data includes, for example, pseudo-distance information, carrier phase information, and Doppler frequency information.

The pseudo-distance information is information regarding a distance between a satellite and a receiver (e.g., the reference station or positioning terminal 10). The receiver is capable of calculating the distance to the satellite by analyzing a positioning signal. For example, the receiver obtains time taken for the positioning signal to reach on the basis of the following information.
(1) A difference between a pattern of a code carried by the positioning signal and a pattern (replica) of a code generated by the receiver
(2) A time when the satellite generated the signal and a time when the receiver received the signal

The time when the satellite generated the signal is included in a message (NAVDATA) of the positioning signal.

The receiver obtains a pseudo-distance between the satellite and the receiver by multiplying the time taken for the positioning signal to reach by the speed of light. The pseudo-distance includes an error caused by a difference between a clock of the satellite and a clock of the receiver and the like. The pseudo-distance information is generated for four or more satellites in order to reduce errors.

The carrier phase information is a phase of the positioning signal received by the receiver. The positioning signal is a certain sine wave. The receiver can calculate a phase of the positioning signal by analyzing the received positioning signal.

The Doppler frequency information is information regarding relative speeds of the satellite and the receiver. The receiver can generate the Doppler frequency information by analyzing the positioning signal.

### [RTK Processing]

Next, RTK processing will be described. RTK processing is processing where RTK, which is one of interference positioning methods, is performed.

RTK is a positioning method where a position of a certain point is measured using a carrier phase integrated value of a positioning signal transmitted from a satellite. The carrier phase integrated value is the sum of (1) the number of waves of the positioning signal and (2) phases from the satellite to the certain point.

Once the carrier phase integrated value is obtained, a distance between the satellite and the certain point can be obtained since frequency (and wavelength) of the positioning signal is known. Because the number of waves of the positioning signal is an unknown value, the number of waves of the positioning signal is called integer ambiguity or an integer bias.

In RTK, noise reduction and estimation (or determination) of integer ambiguity are performed.

In RTK, for example, noise can be reduced by calculating a difference called a double difference. The double difference is a difference between values of differences (single differences), calculated by two receivers (e.g., the reference station and positioning terminal 10), in the carrier phase integrated value in relation to two satellites. Because four or more satellites are used in positioning based on RTK, the same number of double differences as the number of combinations of the four or more satellites is calculated. Reference station positioning data generated by the reference station and positioning terminal positioning data generated by positioning terminal 10, for example, are used for the calculation of double differences.

In RTK, various methods can be used to estimate the integer ambiguity. The integer ambiguity is estimated by performing a procedure of, for example, (1) estimation of a float solution in a least squares method and (2) verification of a fixed solution based on the float solution.

The estimation of a float solution in the least squares method is performed by creating simultaneous equations using a combination of double differences generated for each time unit and solving the created simultaneous equations using the least squares method. In this processing, for example, reference station positioning data generated by the reference station, positioning terminal positioning data generated by positioning terminal 10, and known coordinates of the reference station are used. A real estimate of the integer ambiguity estimated in this manner is called a float solution (estimated solution).

Whereas the float solution obtained as described above is a real number, a true value of the integer ambiguity is an integer. The float solution, therefore, is converted into an integer through "rounding". Here, there can be a plurality of candidates for a combination for rounding the float solution.

A correct integer is verified among the plurality of candidates. A solution found, as a result of the verification, to be probable as an integer bias is called a fixed solution (accurate positioning solution). In an example, a quality check is performed using an AR (ambiguity ratio) value obtained as a result of the RTK processing, and a correct integer is verified on the basis of a result of the quality check. In order to efficiently narrow down candidates for an integer, reference station positioning data generated by a reference station may be used.

### [Positioning Terminal Position Measurement (Determination) Based on RTK Processing]

Next, measurement (determination) of a position (coordinates on Earth) of positioning terminal 10 performed by processor 101 of positioning terminal 10 will be described.

Processor 101 performs interference positioning based on RTK (RTK processing) using, for example, positioning terminal positioning data from positioning terminal 10 and reference station positioning data from the reference station (i.e., correction data transmitted from reference station data distribution server 30), and calculates a positioning solution (a fixed solution or a float solution). A positioning solution obtained through RTK processing may also be referred to as an "RTK positioning solution".

Processor 101 performs a quality check using an AR value obtained through RTK processing. When the AR value is larger than or equal to a certain threshold (e.g., 3.0), processor 101 determines that a correct fixed solution has been obtained, and outputs the fixed solution. When the AR value is smaller than the certain threshold, processor 101 determines that a correct positioning solution has not been obtained, and outputs a float solution.

Processor 101 then determines the RTK positioning solution as the position (coordinates on Earth) of positioning terminal 10.

### <Configuration of Host Server>

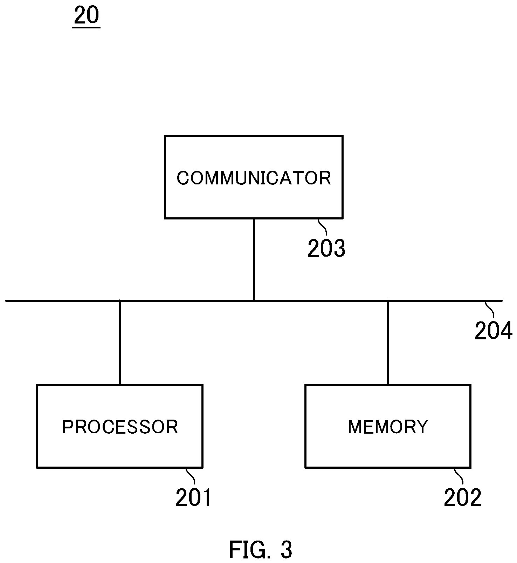

FIG. 3 is a block diagram illustrating an example of configuration of host server 20 according to Embodiment 1. As illustrated in FIG. 3, host server 20 includes processor 201, memory 202, communicator 203, and bus 204.

Processor 201 may be achieved by a processing device such as a CPU. Processor 201 controls overall operation of host server 20 (e.g., the other elements of host server 20). Processor 201 may also be referred to as a computer, a regulator, a calculator, a controller, or the like.

As described above, processor 201 automatically sets dangerous areas in accordance with conditions. If, when a congestion detection target area is set, there are a certain number (also referred to as a congestion determination number or a threshold) or more of other positioning terminals 10 (or if there are other positioning terminals 10 more than the congestion determination number) in a circular area centered on a position of a certain positioning terminal 10 and having a certain radius (congestion determination distance), for example, processor 201 automatically sets the circular area as a dangerous area. More specifically, for example, processor 201 may obtain positions of positioning terminals 10 through communicator 203 and compare the obtained positions of positioning terminals 10 with a position of the circular area to calculate or obtain the number of other positioning terminals 10 in the circular area. In a (terminal) congested state where there are positioning terminals 10 more than the congestion determination number in a circular area having the certain radius, it is desirable to cause positioning terminals 10 in the area to output an alarm in order to reduce possibilities of a contact (or a collision) between workers carrying positioning terminals 10, a contact between construction vehicles on which positioning terminals 10 are mounted, and a contact between a worker carrying positioning terminal 10 and a construction vehicle on which positioning terminal 10 is mounted. Positioning terminal 10 on which a dangerous area is centered may be positioning terminal 10 possessed by, among construction vehicles on which positioning terminals 10 are mounted, workers who possess positioning terminals 10, or the like, a construction vehicle or a worker who is the most dangerous to approach. Examples include a construction vehicle that makes large movements, such as a crane, and a worker who performs an operation, such as cutting or welding, that is dangerous to persons around the worker. In doing so, an alarm for avoiding danger can be output more reliably for a construction vehicle or a worker who is approaching a dangerous area. Processor 201 is an example of an obtainer in the present disclosure. The number of other positioning terminals 10 in an area centered on a position of a certain positioning terminal 10 and having a certain radius is an example of the "number of terminals in a certain area" in the present disclosure.

If, when an overweight detection target area is set, a total value of weights of workers carrying positioning terminals 10 and construction vehicles on which positioning terminals 10 are mounted is larger than or equal to (or larger than) a certain weight (also referred to as an overweight determination threshold, a threshold, or a maximum weight), for example, processor 201 automatically sets the overweight detection target area as a dangerous area. In this case, for example, host server 20 may store weights, input by a user such as the operation manager, of workers carrying positioning terminals 10 and construction vehicles on which positioning terminals 10 are mounted while associating the weights with the identification information regarding positioning terminals 10 and obtain weight of a worker or a construction vehicle associated with the identification information regarding each positioning terminal 10 in the overweight detection area to obtain the weight. More specifically, for example, processor 201 may obtain identification information regarding and positions of positioning terminals 10 through communicator 203 and compare the obtained positions of positioning terminals 10 with a position of the overweight detection target area to determine positioning terminals 10 in the overweight detection target area on the basis of the obtained identification information regarding positioning terminals 10. Processor 201 may then obtain weight of a worker or a construction vehicle associated with the identification information regarding each positioning terminal 10 in the overweight detection target area from the obtained identification information regarding positioning terminals 10, the identification information regarding positioning terminals 10 stored in memory 202, and the weights of the workers and the construction vehicles associated with the identification information. In doing so, the weights of the workers and the construction vehicles can be obtained without directly measuring a weight applied in the overweight detection target area. Processor 201 is an example of the obtainer in the present disclosure. Weight of at least workers or construction vehicles associated with the identification information regarding all positioning terminals 10 in the overweight detection target area is an example of "weights of mobile objects associated with terminals in a certain area" in the present disclosure. When a total value of weights of workers and construction vehicles is larger than or equal to the overweight determination threshold (or when the total value is larger than the overweight determination threshold), it can be interpreted that there are many positioning terminals 10 in the overweight detection target area, and it can be estimated that the overweight detection target area is in a congested state in terms of the number of positioning terminals 10. In a (terminal) overweight state (and accordingly a congested state) where the total value of weights of workers and construction vehicles in an overweight detection target area is larger than or equal to the overweight determination threshold, it is desirable to cause positioning terminals 10 in the area to output an alarm in order to reduce possibilities of a contact between workers carrying positioning terminals 10, a contact between construction vehicles on which positioning terminals 10 are mounted, and a contact between a worker carrying positioning terminal 10 and a construction vehicle on which positioning terminal 10 is mounted. There are cases where temporary scaffolding is constructed in a work site such as a construction site or a building site, and in this case, a weight limit is often provided to ensure work safety. In this case, therefore, it is desirable to cause positioning terminals 10 in an overweight detection target area in an overweight state to output an alarm in order to ensure work safety more reliably.

Processor 201 may output, for example, positional information regarding a congestion detection target area, a congestion determination distance, a congestion determination number, positional information regarding an overweight detection target area, an overweight determination threshold, weights of workers carrying positioning terminals 10, and weights of construction vehicles on which positioning terminals 10 are mounted input by a user such as the operation manager through an inputter to memory 202. The congested state and the overweight state may be referred to as a (potential) contact danger state, a (potential) collision danger state, a (potential) accident danger state, or the like, instead.

Processor 201 may set one threshold or a plurality of stepwise thresholds for determining approach of positioning terminal 10 to a dangerous area. The one or plurality of thresholds may be referred to as a predicted entry time threshold. That is, the predicted entry time threshold is a threshold to be compared with a predicted time at which positioning terminal 10 will enter a dangerous area, which will be described later. When a distance between positioning terminal 10 and the center of a dangerous area is larger than or equal to a certain distance, processor 201 may determine not to cause positioning terminal 10 to output an alarm. Processor 201 may set the certain distance as a threshold. The threshold may be referred to as a non-alarm distance threshold. For example, processor 201 may set a threshold input by a user, such as the operation manager, through an inputter as the predicted entry time threshold or the non-alarm distance threshold. Processor 201 may output the predicted entry time threshold and the non-alarm distance threshold to memory 202.

Each time a positioning result is received from positioning terminal 10 associated with a worker, for example, processor 201 may predict a time of entry of positioning terminal 10 into a set dangerous area (i.e., a predicted time at which positioning terminal 10 will reach the dangerous area) on the basis of the positioning result and the dangerous area. The expression "predict a time of entry" may be replaced by "estimate a time of entry", "guess a time of entry", "determine a (predicted) time of entry", "obtain a (predicted) time of entry", "find a (predicted) time of entry", "calculate a (predicted) time of entry", or "derive a (predicted) time of entry".

Processor 201 automatically sets a dangerous area on the basis of at least, for example, a received latest positioning result of positioning terminal 10, a congestion determination distance, a congestion determination number, an overweight detection target area, a total value of weights, or an overweight determination threshold. Processor 201 then determines entry or approach of positioning terminal 10 to the dangerous area (detects an alarm event) on the basis of a positioning result of positioning terminal 10, a position of the dangerous area, and at least the predicted entry time threshold or the non-alarm distance threshold.

Processor 201 generates an alarm output instruction for notifying a worker associated with positioning terminal 10 (and a worker driving construction vehicle depending on the case) of occurrence of the detected alarm event. Processor 201 outputs the alarm output instruction to memory 202. Processor 201 transmits the alarm output instruction to positioning terminal 10 through communicator 203.

Each time a positioning result is received from positioning terminal 10, for example, processor 201 transmits, to monitor device 40 through communicator 203, information such as a set dangerous area, the received positioning result, and positioning terminal 10 to which an alarm output instruction is to be transmitted to display the information.

Memory 202 may be, for example, one or more of a DRAM, an HDD, an SSD, and the like. Memory 202 obtains various pieces of information from the other elements and temporarily or permanently holds the various pieces of information. Memory 202 is a general term for a so-called primary storage device and a secondary storage device. A plurality of memories 202 may be physically provided, instead.

Memory 202 stores, for example, programs to be executed by processor 201 to operate host server 20, data necessary for host server 20 to operate, data generated by processor 201, positioning results transmitted from positioning terminals 10, weights of workers carrying positioning terminals 10, weights of construction vehicles on which positioning terminals 10 are mounted, positional information regarding congestion detection target areas, positional information regarding overweight detection target areas, the congestion determination distance, the congestion determination number, the overweight determination threshold, the predicted entry time threshold, the non-alarm distance threshold, information regarding set dangerous areas, generated alarm output instructions, and the like.

Communicator 203 receives a positioning result transmitted from positioning terminal 10. Communicator 203 outputs the received positioning result to processor 201 and memory 202. Communicator 203 transmits alarm output instructions to positioning terminals 10.

Processor 201, memory 202, and communicator 203 are communicably connected to one another by bus 204.

The above configuration of host server 20 is an example. Some of the components of host server 20 may be integrated together. Some of the components of host server 20 may be divided into a plurality of elements. Some of the components of host server 20 may be omitted. Other elements may be added to host server 20. For example, an inputter, which may be a touch display, a keyboard, a mouse, or the like, may be added to host server 20.

### [Prediction of Entry Time (Calculation of Predicted Entry Time)]

Next, calculation of predicted time of entry of positioning terminal 10 into a dangerous area will be described.

Processor 201 determines, on the basis of a received (current) position, a received (current) velocity, and a received (current) travel direction of positioning terminal 10 and a position of a boundary line (circumference) of a set dangerous area, whether positioning terminal 10 will enter the dangerous area if positioning terminal 10 travels straight in the (current) travel direction from the (current) position with the (current) velocity.

If determining that positioning terminal 10 will enter the dangerous area, processor 201 calculates, on the basis the received (current) position, the received (current) velocity, and the received (current) travel direction of positioning terminal 10 and the position of the boundary line (circumference) of the set dangerous area, time (i.e., predicted entry time) (e.g., unit: seconds) taken until positioning terminal 10 reaches a point on the boundary line (circumference) of the dangerous area closest to positioning terminal 10 if positioning terminal 10 travels straight in the (current) travel direction from the (current) position with the (current) velocity.

### [Determination of Approach to Dangerous Area]

Next, a determination whether positioning terminal 10 is approaching a dangerous area will be described.

As described above, processor 201 may set a plurality of stepwise predicted entry time thresholds (e.g., unit: seconds) and a non-alarm distance threshold (e.g., unit: meters). Although an example where the number of the plurality of predicted entry time thresholds is two will be described hereinafter, it is obvious that the number of the plurality of predicted entry time thresholds may be three or more, instead. Alternatively, one predicted entry time threshold may be used instead of using the plurality of predicted entry time thresholds. In the following description, two predicted entry times are defined as a first predicted entry time threshold and a second predicted entry time threshold, and the first predicted entry time threshold < the second predicted entry time threshold.

When a position (latitude and longitude) of positioning terminal 10 is outside a set dangerous area, processor 201 calculates distance l (e.g., unit: meters) from the position of positioning terminal 10 to a point closest to positioning terminal 10 at which a straight line connecting the position of positioning terminal 10 and the center (coordinates) of the dangerous area intersects a boundary line (circumference) of the dangerous area.

When the non-alarm distance threshold ≤ distance l, processor 201 does not generate an alarm output instruction.

When distance l ≤ the non-alarm distance threshold and predicted entry time < the first predicted entry time threshold, processor 201 detects an alarm event as a first approach state.

When distance l < the non-alarm distance threshold and the first predicted entry time threshold ≤ the predicted entry time < the second predicted entry time threshold, processor 201 detects an alarm event as a second approach state.

The first approach state is a state where it is predicted that positioning terminal 10 will reach a dangerous area earlier than in the second approach state.

In the above-described conditions, "≤" may be replaced by "<" as appropriate, and "<" may be replaced by "≤" as appropriate.

When the number of the plurality of predicted entry time thresholds is n (n: an integer larger than or equal to 3), too, processor 201 can detect an alarm event as a k-th approach state (k = 1, 2, ..., n) as in the above description.

By setting the non-alarm distance threshold, an alarm is thus not output when a distance between the center of a dangerous area and a position of positioning terminal 10 is larger than or equal to the non-alarm distance threshold (or exceeds the non-alarm distance threshold), and excessive output of alarms can be suppressed.

In addition, since an alarm is output while identifying an approach state in accordance with predicted entry time when a distance between the center of a dangerous area and a position of positioning terminal 10 is smaller than the non-alarm distance threshold, a user of positioning terminal 10 can intuitively understand what level of vigilance is required.

In addition, since an alarm is not output when predicted entry time is considerably long (more specifically, longer than or equal to the first predicted entry time), excessive output of alarms for positioning terminals 10 that are unlikely to enter a dangerous area can be suppressed.

### [Generation of Alarm Output Instruction]

Next, generation of an alarm output instruction will be described.

First, generation of an alarm output instruction when positioning terminal 10 is located within a dangerous area will be described.

When a position (latitude and longitude) of positioning terminal 10 is inside a set dangerous area, processor 201 calculates distance L (e.g., unit: meters) between the position of positioning terminal 10 and the center (coordinates) of the dangerous area.

Processor 201 determines a style of an entry alarm according to the calculated distance. When a radius of the dangerous area is denoted by r (e.g., unit: meters), for example, at least volume or a beep period of a buzzer output by alarmer 103 of positioning terminal 10 may be changed depending on whether 0 < L ≤ r/4 (an alarm event that is a first entry state), r/4 < L ≤ r/2 (an alarm event that is a second entry state), r/2 < L ≤ 3r/4 (an alarm event that is a third entry state), or 3r/4 < L ≤ r (an alarm event that is a fourth entry state). In other words, the volume of the buzzer may be increased and/or the beep period of the buzzer may be shortened as positioning terminal 10 becomes closer to the center of the dangerous area. That is, intensity of an alarm may be increased as positioning terminal 10 becomes closer to the center of a dangerous area.

Alternatively, a reference different from radius r of a dangerous area may be used. For example, the volume and the beep period of the buzzer output from alarmer 103 of positioning terminal 10 may be changed in accordance with whether 0 m < L ≤ 0.5 m (an alarm event that is the first entry state), 0.5 m < L ≤ 0.8 m (an alarm event that is the second entry state), 0.8 m < L ≤ 0.9 m (an alarm event that is the third entry state), or 0.9 m < L ≤ r (an alarm event that is the fourth entry state). In this case, too, the volume of the buzzer may be increased and/or the beep period of the buzzer may be shortened as positioning terminal 10 becomes closer to the center of the dangerous area. That is, intensity of an alarm may be increased as positioning terminal 10 becomes closer to the center of a dangerous area.

In the above-described conditions, "≤" may be replaced by "<" as appropriate, and "<" may be replaced by "≤" as appropriate.

Although an example where four levels of alarms are given has been described above, two or three levels, or five or more levels, of alarms may be given, instead. Conditions for defining a plurality of levels are not limited to the above example.

Although an entry state is identified on the basis of a distance to the center of a dangerous area in the above description, an entry state may be identified in accordance with a distance between positioning terminal 10 and a circumference of a dangerous area, instead. In this case, if the distance between positioning terminal 10 and the dangerous area is a negative value, that is, if positioning terminal 10 has entered the dangerous area, an intense alarm may be output. Especially when the entirety of a dangerous area is dangerous, danger to the user can be suppressed by outputting an alarm in this style.

Processor 201 then generates an alarm output instruction for an entry alarm in the determined style.

Secondly, generation of an alarm output instruction when positioning terminal 10 is located outside a dangerous area will be described.

When positioning terminal 10 is in the above-described first approach state, processor 201 generates an alarm output instruction corresponding to the first approach state (the alarm may be referred to as a first cautionary alarm). A style of the first cautionary alarm corresponding to the first approach state may be different from the style of the entry alarm described above. For example, the first cautionary alarm corresponding to the first approach state may have a volume even smaller than that of the buzzer in the above-described style and/or the buzzer may be output just once or twice.

When positioning terminal 10 is in the above-described second approach state, processor 201 generates an alarm output instruction corresponding to the second approach state (the alarm may be referred to as a second cautionary alarm). A style of the second cautionary alarm corresponding to the second approach state may be different from the style of the entry alarm and the style of the first cautionary alarm described above. For example, the second cautionary alarm corresponding to the second approach state may have a volume even smaller than that of the buzzer of the first cautionary alarm and/or the buzzer may be output even fewer times than the number of times that the buzzer of the first cautionary alarm is output.

Processor 201 thus generates an alarm output instruction to cause positioning terminal 10 to output an alarm for entry and approach thereof to a dangerous area, and communicator 203 transmits the alarm output instruction to positioning terminal 10.

Processor 201 generates different alarm output instructions for different predicted times at which positioning terminal 10 will enter a dangerous area so that alarms in different styles will be output for the different predicted times, and communicator 203 transmits these alarm output instructions to positioning terminal 10.

By setting the plurality of stepwise predicted entry time thresholds, alarms are thus output stepwise in accordance with predicted entry time, and entry of positioning terminal 10 into a dangerous area can be efficiently prevented.

By changing behavior of an alarm inside and outside a dangerous area, a worker can be effectively urged to exit the dangerous area.

The styles may be replaced by modes.

### <Operation of Alarm System>

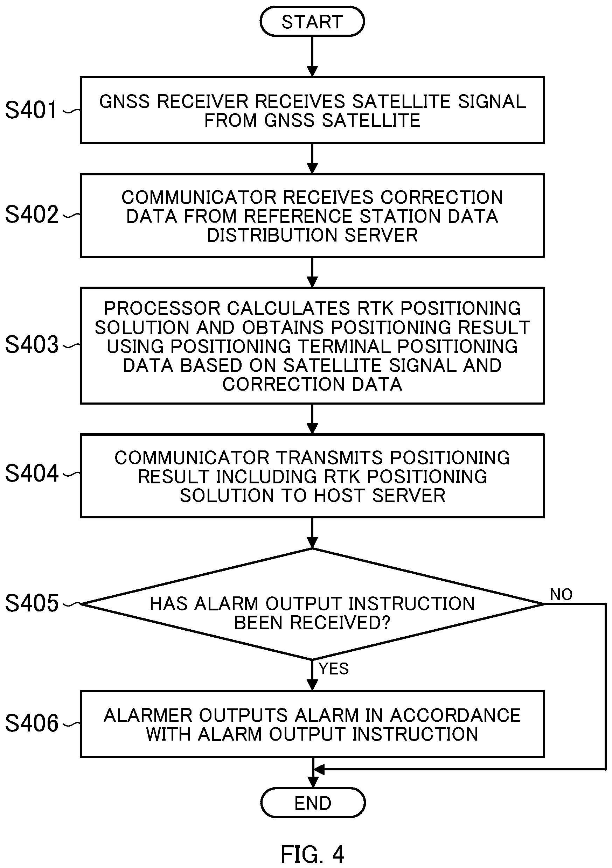

Next, an example of operation of alarm system 1 according to Embodiment 1 will be described with reference to FIGS. 4, 5, 6A to 6C, and 7A to 7C.

### [Operation of Positioning Terminal]

FIG. 4 is a diagram illustrating an example of operation of positioning terminal 10 according to Embodiment 1.

In step S401, GNSS receiver 104 receives a satellite signal transmitted from a GNSS satellite.

In step S402, communicator 105 receives correction data transmitted from reference station data distribution server 30.

In step S403, processor 101 performs RTK processing using positioning terminal positioning data based on the satellite signal and the correction data to calculate an RTK positioning solution and obtain a positioning result.

In step S404, communicator 105 transmits the positioning result including the RTK positioning solution to host server 20.

In step S405, processor 101 or communicator 105 determines whether communicator 105 has received an alarm output instruction (e.g., within a certain period of time since the transmission of the positioning result).

If communicator 105 has received an alarm output instruction (e.g., within the certain period of time since the transmission of the positioning result) (YES in step S405), alarmer 103 outputs, in step S406, an alarm in a style specified (determined) by host server 20 in accordance with the alarm output instruction. The flow then ends.

If communicator 105 has not received an alarm output instruction (e.g., within the certain period of time since the transmission of the positioning result) (NO in step S405), on the other hand, the flow ends.

The process in FIG. 4 is then repeated.

### [Operation of Host Server]

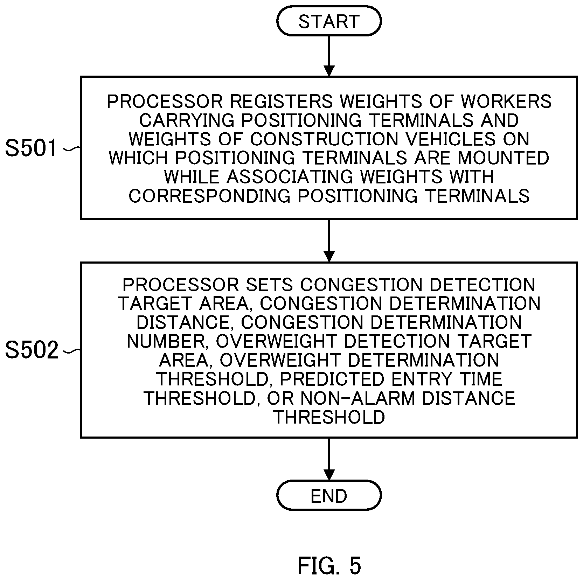

FIGS. 5, 6A to 6C, and 7A to 7C are diagrams illustrating examples of operation of host server 20 according to Embodiment 1. FIG. 5 relates to registration and presetting of host server 20.

In step S501, processor 201 registers weights of workers possessing positioning terminals 10 and weights of construction vehicles on which positioning terminals 10 are mounted while associating the weights with corresponding positioning terminals 10 (stores the weights in memory 202).

In step S502, processor 201 sets a congestion detection target area, the congestion determination distance, the congestion determination number, an overweight detection target area, the overweight determination threshold, the predicted entry time threshold, or the non-alarm distance threshold. The process in FIG. 5 then ends.

The information registered in step S501 may be registered through, for example, a user input. The information set in step S502 may be statically or semi-statically set through, for example, a user input or may be fixed in alarm system 1.

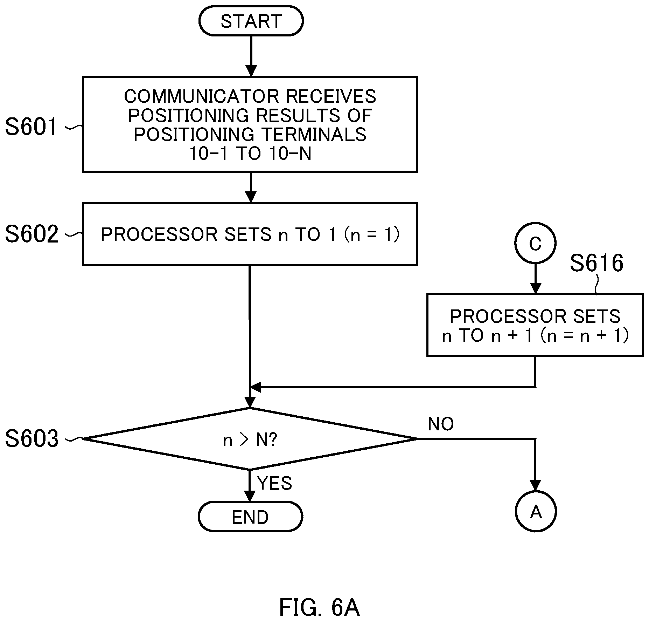

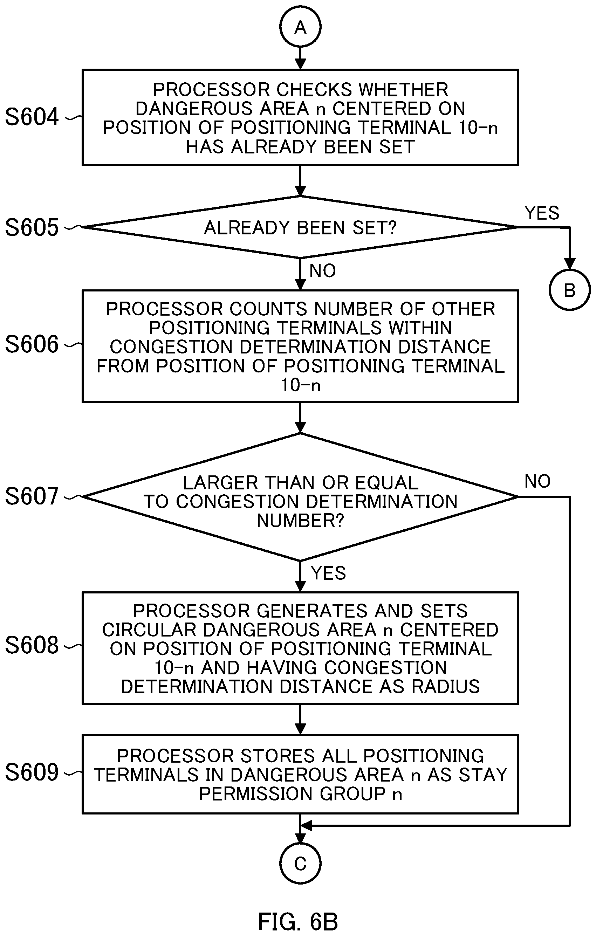

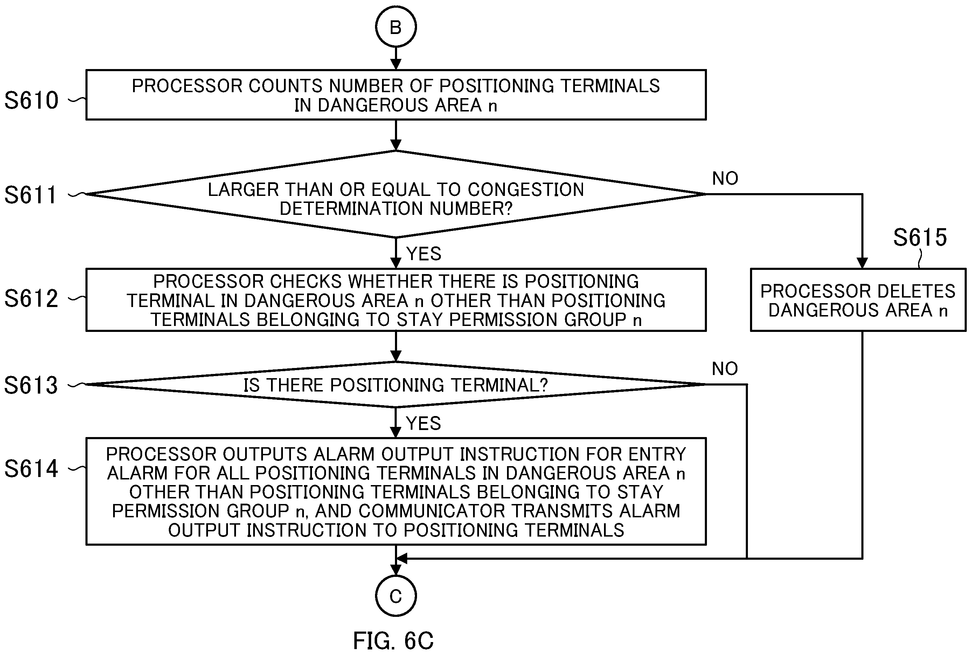

Next, another example of the operation of host server 20 will be described with reference to FIGS. 6A to 6C. An example of the operation of host server 20 will be described hereinafter while taking entry of positioning terminal 10 into a dangerous area as an example and assuming that all positioning terminals 10 (positioning terminals 10-1 to 10-N) are present in a congestion detection target area.

In step S601, communicator 203 receives positioning results of positioning terminals 10 (N (N is an integer larger than or equal to 2) positioning terminals 10-1 to 10-N in this example) transmitted from positioning terminals 10-1 to 10-N.

In step S602, processor 201 sets variable n to 1 (n = 1).

In step S603, processor 201 determines whether the value set as variable n is larger than N (determines whether n > N).

If the value set as variable n is larger than N (YES in step S603), the flow ends.

If the value set as variable n is not larger than N (NO in step S603), on the other hand, the flow proceeds to step S604. If step S603 is performed after step S602, n (= 1) ≤ N (an integer larger than or equal to 2), and the flow proceeds to step S604.

If step S604, processor 201 checks whether dangerous area n centered on a position (coordinates) of positioning terminal 10-n has already been set (stored in memory 202).

If, as a result of the check, dangerous area n has not been set yet (NO in step S605), processor 201 counts, in step S606, the number of other positioning terminals present within the congestion determination distance from the position of positioning terminal 10-n on the basis of the positioning results of positioning terminals 10-1 to 10-N received in step S601.

In step S607, processor 201 determines whether the number of other positioning terminals counted is larger than or equal to the congestion determination number.

If the number of other positioning terminals counted is larger than or equal to the congestion determination number (YES in step S607), processor 201 determines, in step S608, to set a dangerous area and generates and sets circular dangerous area n centered on the position of positioning terminal 10-n and having the congestion determination distance as a radius thereof. Dangerous area n is an example of a "specific area including positions of a plurality of terminals set in accordance with the positions" in the present disclosure. A possibility of a contact, a collision, or an accident can thus be reduced by setting a dangerous area in a congested state.

In step S609, processor 201 stores, in memory 202 as stay permission group n, all positioning terminals in dangerous area n on the basis of the positioning results of positioning terminals 10-1 to 10-N received in step S601 and a position of dangerous area n. The flow then proceeds to step S616. Here, a stay permission group is a group that need not output an alarm even when a terminal belonging to the group is present in dangerous area n. If a stay permission group is not set, a terminal that has been present in dangerous area n before dangerous area n is set, for example, suddenly outputs an alarm as dangerous area n is set. Because such an alarm might confuse a person who possesses the terminal, positioning terminals that have been present in dangerous area n before dangerous area n is set are included in a stay permission group in the present embodiment.

If the number of other positioning terminals counted is not larger than or equal to the congestion determination number (NO in step S607), on the other hand, the flow proceeds to step S616.

If, as a result of the check in step S604, dangerous area n has already been set (YES in step S605), the flow proceeds to step S610.

In step S610, processor 201 counts the number of positioning terminals in dangerous area n on the basis of the positioning results of positioning terminals 10-1 to 10-N received in step S601.

In step S611, processor 201 determines whether the number of positioning terminals counted is larger than or equal to the congestion determination number.

If the number of positioning terminals counted is larger than or equal to the congestion determination number (YES in step S611), processor 201 checks, in step S612, whether there is a positioning terminal in dangerous area n other than the positioning terminals belonging to stay permission group n on the basis of the positioning results of positioning terminals 10-1 to 10-N (except for the positioning terminals belonging to stay permission group n) received in step S601 and the position of dangerous area n.

If, as a result of the check, there is a positioning terminal in dangerous area n other than the positioning terminals belonging to stay permission group n (YES in step S613), processor 201 outputs, in step S614, an alarm output instruction for an entry alarm for all positioning terminals in dangerous area n other than the positioning terminals belonging to stay permission group n. Accordingly, communicator 203 transmits the alarm output instruction to the positioning terminals. The flow then proceeds to step S616.

If, as a result of the check, there is no positioning terminal in dangerous area n other than the positioning terminals belonging to stay permission group n (NO in step S613), on the other hand, the flow proceeds to step S616.

If the number of positioning terminals counted is not larger than or equal to the congestion determination number in step S611 (NO in step S611), processor 201 determines, in step S615, to cancel the setting of dangerous area n, and deletes set dangerous area n (stored in memory 202). Processor 201 also deletes stay permission group n. Excessive output of alarms can thus be suppressed by cancelling setting of a dangerous area that is no longer in a congested state (a possibility of a contact, a collision, or an accident has decreased). The flow then proceeds to step S616.

In step S616 after step S607 (if NO), S609, S613 (if NO), S614, or S615, processor 201 sets variable n to n + 1 (n = n + 1). If the flow proceeds to step S616 after the above-described series of processing steps after step S602, processor 201 sets variable n to 2. The flow then proceeds to step S603. The above-described processing is then repeated.

Processor 201 performs the check in step S612 in order to determine whether to cause a positioning terminal in dangerous area n to output an alarm in accordance with whether the positioning terminal belongs to stay permission group n. If the positioning terminal in dangerous area n does not belong to stay permission group n in step S614, processor 201 determines to cause the positioning terminal to output an alarm. If the positioning terminal in dangerous area n belongs to stay permission group n, processor 201 determines not to cause the positioning terminal to output an alarm. A possibility that confusion arises due to output of alarms at many places in a dangerous area can thus be reduced by decreasing the number of positioning terminals caused to output an alarm.

The processing illustrated in FIGS. 6A to 6C is thus repeated.

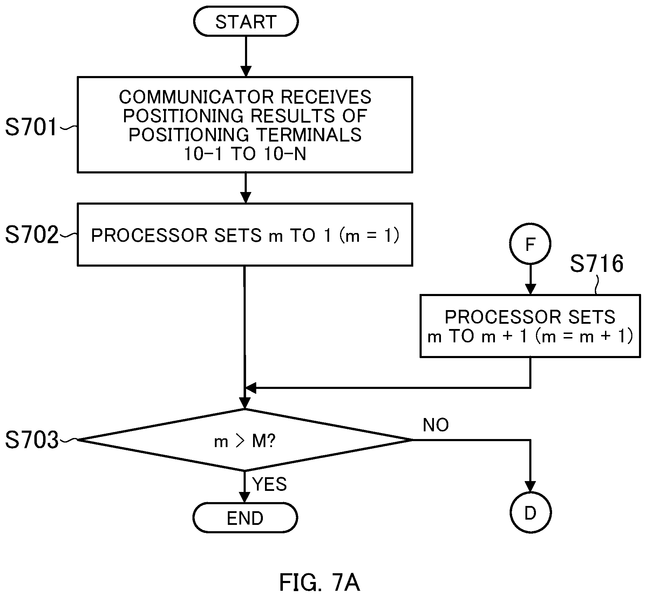

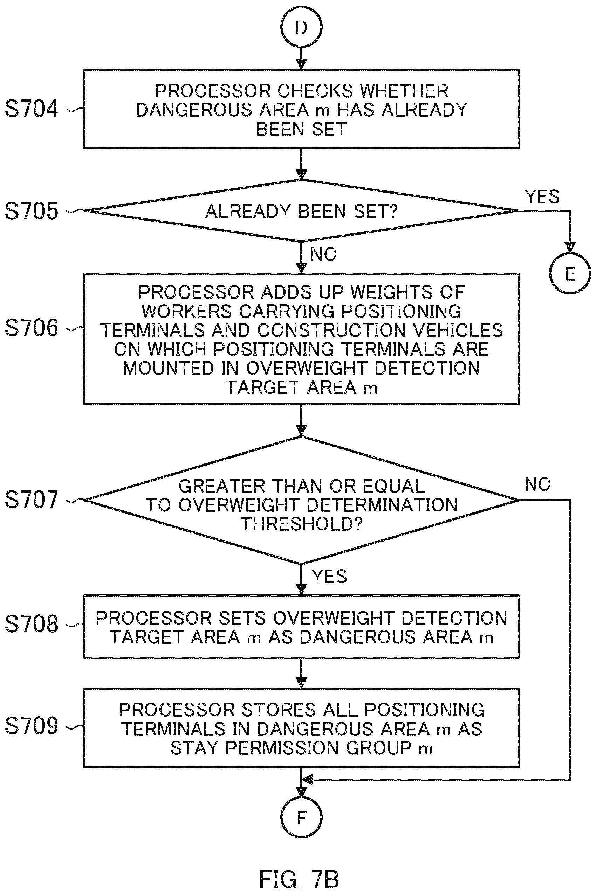

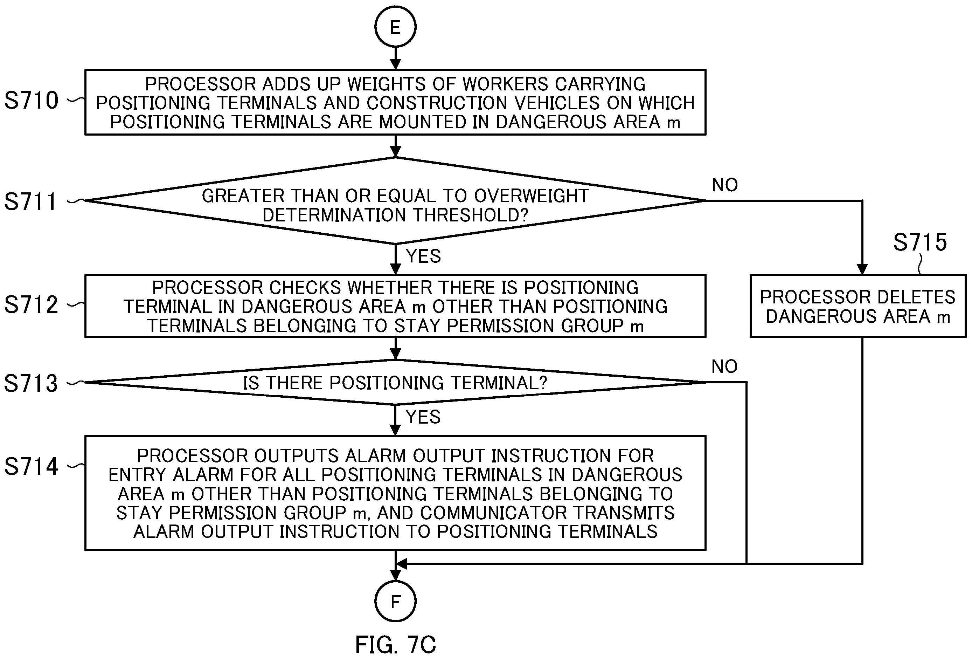

Next, yet another example of the operation of host server 20 will be described with reference to FIGS. 7A to 7C. An example of the operation of host server 20 will be described hereinafter while taking entry of positioning terminal 10 into a dangerous area as an example.

In step S701, communicator 203 receives positioning results of positioning terminals 10 (N (N is an integer larger than or equal to 2) positioning terminals 10-1 to 10-N in this example) transmitted from positioning terminal 10-1 to 10-N.

In step S702, processor 201 sets variable m to 1 (m = 1).

In step S703, processor 201 determines whether the value set as variable m is larger than M (determines whether m > M). Here, the value M indicates the number of congestion detection target areas set and is an integer larger than or equal to 1.

If the value set as variable m is larger than M (YES in step S703), the flow ends.

If the value set as variable m is not larger than M (NO in step S703), on the other hand, the flow proceeds to step S704. If step S703 is performed after step S702, m (= 1) ≤ M (an integer larger than or equal to 1), and the flow proceeds to step S704.

In step S704, processor 201 checks whether dangerous area m has already been set (stored in memory 202).

If, as a result of the check, dangerous area m has not been set yet (NO in step S705), processor 201 adds up, in step S706, weights of workers possessing positioning terminals and construction vehicles on which positioning terminals are mounted in overweight detection target area m on the basis of the positioning results of positioning terminals 10-1 to 10-N received in step S701 and a position of overweight detection target area m. A "worker possessing a positioning terminal in overweight detection target area m" is an example of a "person associated with a terminal present in an area" in the present disclosure. A "construction vehicle on which a positioning terminal is mounted in overweight detection target area m" is an example of an "object associated with a terminal present in an area" in the present disclosure.

In step S707, processor 201 determines whether the total weight is greater than or equal to the congestion determination threshold.

If the total weight is greater than or equal to the congestion determination threshold (YES in step S707), processor 201 determines, in step S708, to set a dangerous area and sets overweight detection target area m as dangerous area m. The dangerous area m is an example of a "specific area including positions of a plurality of terminal set in accordance with the positions" in the present disclosure. A possibility of a contact, a collision, or an accident can thus be reduced by setting a dangerous area in an overweight state (and accordingly a congested state), and work safety at a time when a weight limit is provided can be ensured more reliably for workers.

Next, in step S709, processor 201 stores all positioning terminals in dangerous area m in memory 202 as stay permission group m on the basis of the positioning results of positioning terminals 10-1 to 10-N received in step S701 and a position of dangerous area m. The flow then proceeds to step S716.

If the total weight is not greater than or equal to the overweight determination threshold (NO in step S707), on the other hand, the flow proceeds to step S716.

If, as a result of the check in step S704, dangerous area m has already been set (YES in step S705), the flow proceeds to step S710.

In step S710, processor 201 adds up weights of workers possessing positioning terminals and construction vehicles on which positioning terminals are mounted in dangerous area m on the basis of the positioning results of positioning terminals 10-1 to 10-N received in step S701 and the position of dangerous area m.

In step S711, processor 201 determines whether the total weight is greater than or equal to the overweight determination threshold.

If the total weight is greater than or equal to the overweight determination threshold (YES in step S711), processor 201 checks, in step S712, whether there is a positioning terminal in dangerous area m other than the positioning terminals belonging to stay permission group m on the basis of the positioning results of positioning terminals 10-1 to 10-N (except for the positioning terminals belonging to stay permission group m) received in step S701 and the position of dangerous area m.

If, as a result of the check, there is a positioning terminal in dangerous area m other than the positioning terminals belonging to stay permission group m (YES in step S713), processor 201 outputs, in step S714, an alarm output instruction for an entry alarm for all positioning terminals in dangerous area m other than the positioning terminals belonging to stay permission group m. Accordingly, communicator 203 transmits the alarm output instruction to the positioning terminals. The flow then proceeds to step S716.

If, as a result of the check, there is no positioning terminal in dangerous area m other than the positioning terminals belonging to stay permission group m (NO in step S713), on the other hand, the flow proceeds to step S716.

If the total weight is not greater than or equal to the overweight determination threshold in step S711 (NO in step S711), processor 201 determines, in step S715, to cancel the setting of dangerous area m, and deletes set dangerous area m (stored in memory 202). Processor 201 also deletes stay permission group m. Excessive output of alarms can thus be suppressed by cancelling setting of a dangerous area that is no longer in an overweight state (and accordingly a congested state) (a possibility of a contact, a collision, or an accident has decreased). The flow then proceeds to step S716.

In step S716 after step S707 (if NO), S709, S713 (if NO), S714, or S715, processor 201 sets variable m to m + 1 (m = m + 1). If the flow proceeds to step S716 after the above-described series of processing steps after step S702, processor 201 sets variable m to 2. The flow then proceeds to step S703. The above-described processing is then repeated.

Processor 201 performs the check in step S712 in order to determine whether to cause a positioning terminal in dangerous area m to output an alarm in accordance with whether the positioning terminal belongs to stay permission group m. If the positioning terminal in dangerous area m does not belong to stay permission group m in step S714, processor 201 determines to cause the positioning terminal to output an alarm. If the positioning terminal in dangerous area m belongs to stay permission group m, processor 201 determines not to cause the positioning terminal to output an alarm. A possibility that confusion arises due to output of alarms at many places in a dangerous area can thus be reduced by decreasing the number of positioning terminals caused to output an alarm.

The processing illustrated in FIGS. 7A to 7C is thus repeated.

Either the processing illustrated in FIGS. 6A to 6C or the processing illustrated in FIGS. 7A to 7C may be performed independently, or the processing illustrated in FIGS. 6A to 6C and the processing illustrated in FIGS. 7A to 7C may be performed in parallel with each other (as different threads) or sequentially (when both a congestion detection target area and an overweight detection target area have been set). Alternatively, the processing illustrated in FIGS. 6A to 6C may be incorporated into the flow of the processing illustrated in FIGS. 7A to 7C, or the processing illustrated in FIGS. 7A to 7C may be incorporated into the flow of the processing illustrated in FIGS. 6A to 6C.

### <Variations>

### [Variation 1-1]

Although an example where a dynamic (or adaptive) circular area centered on a position of positioning terminal 10 is set has been described in the processing illustrated in FIGS. 6A to 6C, the present disclosure is not limited to this example. For example, as in the processing illustrated in FIGS. 7A to 7C, a static (fixed) (or semi-static) area set through a user input, for example, may be a dangerous area candidate, instead. An example of the static area may be, for example, an area centered on a position at which a dangerous machine or material or the like is provided. In doing so, when positioning terminal 10 approaches a dangerous machine or material or the like, positioning terminal 10 certainly enters a dangerous area, and an alarm for avoiding danger can be reliably output. Alternatively, the entirety of a congestion detection target area may be used as the static area. In doing so, all positioning terminals 10 exposed to danger can output an alarm. As illustrated in FIGS. 6A to 6C, when a static area is a dangerous area candidate, host server 20 may compare the number of positioning terminals 10 in the static area with a threshold and set the static area as a dangerous area in accordance with a result of the comparison. The dangerous area is an example of the "specific area including positions of a plurality of terminals set in accordance with the positions" in the present disclosure.

### [Variation 1-2]

Although an example where a dynamic (or adaptive) circular area centered on a position of positioning terminal 10 is set has been described in the processing illustrated in FIGS. 6A to 6C, the present disclosure is not limited to this example. As described above, for example, when a dangerous area is not set for a certain positioning terminal 10, a congested state is estimated to have been established in terms of the number of positioning terminals 10 if the number of positioning terminals 10 away from certain positioning terminal 10 by a distance smaller than or equal to a certain distance (or smaller than the certain distance) in a circular area centered on certain positioning terminal 10 and having a certain radius is larger than or equal to a certain threshold (or larger than the certain threshold). Host server 20, therefore, may generate and set, as a dangerous area, a dynamic circular area centered on a center of gravity of a polygon whose vertices are positions of positioning terminals 10 that satisfy the condition and having a certain radius. The dangerous area is an example of the "specific area including positions of a plurality of terminals set in accordance with the positions" in the present disclosure.

### [Variation 1-3]

Although an example where a dynamic (adaptive) circular area centered on a position of positioning terminal 10 is set has been described in the processing illustrated in FIGS. 6A to 6C, the present disclosure is not limited to this example. For example, when a congestion detection target area is set, host server 20 may generate and set static (or semi-static) rectangular mesh areas obtained by dividing the congestion detection target area into a mesh and rectangles, compare the number of positioning terminals 10 in each rectangular mesh area with a threshold, and set the static rectangular mesh area as a dangerous area in accordance with a result of the comparison. The dangerous area is an example of the "specific area including positions of a plurality of terminals set in accordance with the positions" in the present disclosure.

### [Variation 1-4]

Although an example where a shape of a dangerous area is a perfect circle has been described above, the present disclosure is not limited to this example. As implied above, a shape of a dangerous area may be a part of a perfect circle (a fan, an arrow, etc.), an oval or a part thereof (half an oval etc.), a polygon such as a triangle or a rectangle, or another shape, instead. In this case, the center of a dangerous area may be replaced by the center of gravity of the dangerous area.

### [Variation 1-5]

Although dangerous areas have the same shape in the above description, dangerous areas may have different shapes, instead. Especially at construction sites, dangerous areas need to correspond to operation areas of construction vehicles, dangerous parts of scaffolding, and the like. When a standard shape such as a perfect circle or a square is employed, therefore, a dangerous area might include a region that is not dangerous or a dangerous region might not be included in a dangerous area. A shape of a dangerous area may be selected (set) in such a way as to avoid such circumstances.

### [Variation 1-6]

In Embodiment 1, positioning terminals 10 that output an alarm need not be all of the plurality of positioning terminals 10. For example, when a construction vehicle or the like on which positioning terminal 10 is mounted can only move along a fixed rail or does not have a mechanism for changing speed, it is difficult to take action to avoid danger even if an alarm is output. If an alarm is output even in this case, the alarm might be confused with another alarm, which might cause danger. It is therefore not necessarily beneficial for all the plurality of positioning terminals 10 to output an alarm. Positioning terminals 10 to output an alarm may be changed in accordance with specification by the operation manager or another person.

### [Variation 1-7]

Although the number of other positioning terminals counted is compared with the congestion determination number in step S607 in FIGS. 6A to 6C above, the number of other positioning terminals counted may be compared with (the congestion determination number - 1) so that step S607 matches step S611 in FIGS. 6A to 6C, instead. Alternatively, the congestion determination number in step S607 and the congestion determination number in step S611 may be separately set.

### [Variation 1-8]

Although an example where a dangerous area is generated and set and an alarm output instruction is not transmitted to positioning terminals 10 in the dangerous area if a dangerous area has not been set yet and the number of other positioning terminals is larger than or equal to the congestion determination number in steps S605 to S609 illustrated in FIGS. 6A to 6C has been described above, the present disclosure is not limited to this. For example, an alarm output instruction may be transmitted to all positioning terminals 10 in a dangerous area without performing step S609 (without determining (storing) a stay permission group), instead. If a dangerous area has already been set and the number of other positioning terminals is larger than the congestion determination number in steps S605 and S610 to S614 in FIGS. 6A to 6C, therefore, an alarm output instruction may be transmitted to all positioning terminals 10 in the dangerous area.

### [Variation 1-9]

Although an example where a dangerous area is set and an alarm output instruction is not transmitted to positioning terminals 10 in the dangerous area if a dangerous area has not been set yet and a total value of weights of workers and construction vehicles associated with positioning terminals 10 in an overweight detection target area is larger than or equal to the overweight determination threshold in steps S705 to S709 in FIGS. 7A to 7C has been described above, the present disclosure is not limited to this example. For example, an alarm output instruction may be transmitted to all positioning terminals 10 in a dangerous area without performing step S709 (i.e., without determining (storing) a stay permission group), instead. If a dangerous area has already been set and a total value of weights of workers and construction vehicles associated with positioning terminals 10 in the dangerous area is larger than or equal to the overweight determination threshold in steps S705 and S710 to S714 in FIGS. 7A to 7C, therefore, an alarm output instruction may be transmitted to all positioning terminals 10 in the dangerous area.

### [Variation 1-10]

Although an example of a case where at least a congestion detection target area or an overweight detection target area is set has been described above, the present disclosure is not limited to this example. If positioning terminal 10 is located outside a congestion detection target area or an overweight detection target area, for example, processor 201 may determine whether positioning terminal 10 has entered or whether the positioning terminal 10 has approached another geofence (an area under construction where earth and sand are piled up, an area where work tools are gathered, an area that might interfere with equipment which might cause an accident such as injury in the case of a contact, etc.), and host server 20 may provide an alarm output instruction indicating entry or approach for positioning terminal 10 in accordance with a result of the determination indicating entry or approach.

### [Variation 1-11]

In the above description, whether a total value of weights is larger than or equal to the overweight determination threshold is determined by obtaining weights of workers or construction vehicles associated with identification information regarding positioning terminals. If a scale or the like provided in an overweight detection target area can directly measure weight, however, the measured weight may be used for the comparison with the overweight determination threshold, instead, regardless of whether positioning terminals are possessed. In doing so, even when there are also workers who do not possess positioning terminals or construction vehicles on which positioning terminals are not mounted, whether the weight has become greater than or equal to the overweight determination threshold, that is, whether to set a dangerous area, can be determined.

### [Variation 1-12]

Although the overweight state is regarded as a type of congested state in the above description, the overweight state and the congested state may be distinguished from each other, instead. In this case, the congested state may be determined on the basis of the number of positioning terminals present regardless of weight. For example, there is a case where the number of positioning terminals is not proportional to weight applied in an overweight detection target area, such as when an extremely heavy construction vehicle is set on weak scaffolding. In this case, although a congested state has not been established in terms of the number of positioning terminals, an overweight state has been established in terms of a total value of weights. In addition, because additional weight upon the scaffolding might lead to an accident, it is desirably to set a dangerous area even through a congested state has not been established in terms of the number. When an overweight detection target area is crowded with light-weight workers, an overweight state has not been established, but a congested state has been established in terms of the number of positioning terminals. In this case, when a collision between workers needs to be prevented, it is desirable to set a dangerous area regardless of a total value of weights. That is, whether to employ the number of positioning terminals and/or weight applied in a congestion determination area may be changed on the basis of an instruction from a manager or another person in accordance with a situation in which the system should set a dangerous area.

### [Variation 1-13]

In the above description, the stay permission group includes all positioning terminals that have been present in a place where a dangerous area is set before the dangerous area is set. Even among positioning terminals that have been present in a place where a dangerous area is set, however, positioning terminals to be included in the stay permission group and terminals not to be included may be distinguished from each other. For example, a manager who directs and supervises workers and construction vehicles that are difficult to move need to stay in the place before and after a dangerous area is sets, but workers who are visiting the place where the dangerous area has been set for the purpose of temporary assistance or the like from another place or who happen to stop by the place might not need to stay there after the dangerous area is set. In this case, control may be performed in such a way as to include, in the stay permission group, users or construction vehicles corresponding to positioning terminals permitted in advance to continue to stay in the place where the dangerous area has been set or a dangerous area candidate and not to include users or construction vehicles corresponding to other positioning terminals (i.e., alarms are to be output). In doing so, workers, construction vehicles, or the like that need not continue to stay in the dangerous area can be urged to exit the dangerous area.

### [Variation 1-14]

Although an example where a dangerous area is not set unless a certain condition is satisfied and is set as the certain condition is satisfied has been described above, the present disclosure is not limited to this. Because a degree of danger increases as a level of congestion or overweight increases, a dangerous area may be expanded as the level of congestion or overweight increases. When congestion and overweight are distinguished from each other as in Variation 1-12, a case where both congestion and overweight occur is considered to be more dangerous than when either one of congestion and overweight occurs. A dangerous area when the conditions of both congestion and overweight are satisfied, therefore, may be larger than a dangerous area when the condition of either one of congestion and overweight is satisfied. Similarly, a more intense alarm may be output in a more dangerous case in accordance with the level of congestion or overweight or whether both congestion and overweight occur. The size of a dangerous area and the intensity of an alarm may both be changed, or only one of these may be changed. The intensity of an alarm may be changed, for example, as described later (Other Variations of Embodiments).

### [Variation 1-15]

In the above description, positioning terminal 10 outputs an alarm on the basis of an alarm output instruction. Positioning terminal 10, however, may receive information indicating entry thereof into a dangerous area (includes both a case where positioning terminal 10 has already entered and a case where positioning terminal 10 is predicted to enter) and, when receiving the information, output an alarm. In this case, control may also be performed in such a way as not to output an alarm if positioning terminal 10 has been present in a place where a dangerous area is set before the dangerous area is set. When positioning terminal 10 stores information indicating whether a continuous stay in the dangerous area is permitted in advance, an alarm need not be output if permitted, and need to be output if not permitted. In this case, host server 20 may transmit information indicating that positioning terminal 10 will enter the dangerous area without transmitting an alarm output instruction.

### [Variation 1-16]

Although an example where host server 20 performs the processing in the present disclosure, such as the setting of a dangerous area and the determination of approach and entry to a dangerous area, has been described above, the present disclosure is not limited to this example. For example, representative positioning terminal 10 among the plurality of positioning terminals 10 may receive a positioning result from each positioning terminal 10 and perform the processing in the present disclosure instead of host server 20.

Each positioning terminal 10 may perform the processing in the present disclosure, such as the determination of approach and entry to a dangerous area, instead. In this case, for example, each positioning terminal 10 may obtain positional information regarding a dangerous area therearound by sharing a position thereof with host server 20 or the like, and perform the processing such as the determination on the basis of the information.

### <Effects>

According to Embodiment 1, whether to set a dangerous area is switched in accordance with the number of position terminals of positioning terminals 10 or weights of mobile objects (e.g., workers or construction vehicles associated with positioning terminals 10) in a region that is a candidate where a dangerous area is to be set (generated). As a result, since a dangerous area can be set or cancelled in accordance with an actual degree of danger, a dangerous area can be appropriately set in accordance with an actual condition (e.g., congestion and overweight).

### (Embodiment 2)

Next, Embodiment 2 of the present disclosure will be described. Embodiment 2 is different from Embodiment 1 in that RTK processing is performed not by positioning terminals but by a host server, that is, a processor of the host server measures (determines) positions of positioning terminals through the above-described RTK processing. Because configuration of alarm system 1', positioning terminals 10', and host server 20' according to Embodiment 2 is the same as that of alarm system 1, positioning terminals 10, and host server 20, differences from Embodiment 1 will be described.

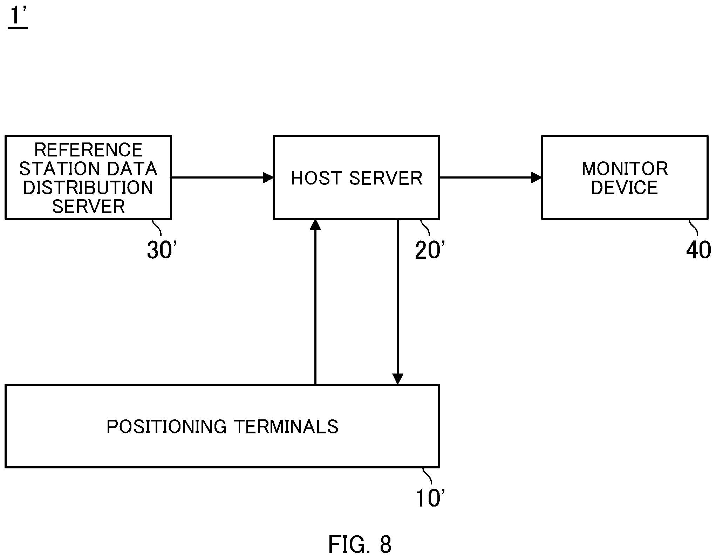

FIG. 8 is a diagram illustrating an example of alarm system 1' according to Embodiment 2. As illustrated in FIG. 8, alarm system 1' includes positioning terminals 10', host server 20', reference station data distribution server 30', and monitor device 40. Alarm system 1' may also be referred to as an information processing system or the like.

Unlike in Embodiment 1, positioning terminal 10' does not perform RTK processing and measure a position thereof. Positioning terminal 10', therefore, need not receive correction data from reference station data distribution server 30', and transmits, to host server 20', positioning terminal positioning data generated on the basis of a satellite signal received from a GNSS satellite. When positioning terminal 10' includes a velocity sensor and an acceleration sensor, positioning terminal 10' may transmit velocity and acceleration from the velocity sensor and the acceleration sensor, respectively, to host server 20'. Positioning terminal 10' is an example of the terminal, the first terminal, the second terminal, or the information processing apparatus (corresponds to representative positioning terminal 10', which will be described later) in the present disclosure.

Host server 20' receives positioning terminal positioning data transmitted from positioning terminal 10' and correction data for performing RTK processing and measuring a position of positioning terminal 10' from reference station data distribution server 30'. Host server 20' is an example of the information processing apparatus in the present disclosure.

Host server 20' measures the position of positioning terminal 10' (also velocity and acceleration depending on the case) by performing RTK processing using the received positioning terminal positioning data and correction data. Host server 20' determines, on the basis of a set dangerous area, an obtained positioning result, and the like, entry and approach of positioning terminal 10' carried by a worker or mounted on a construction vehicle to the dangerous area (i.e., detects an alarm event). Host server 20' may have a subset or all of functions of reference station data distribution server 30', instead. For example, host server 20' may receive correction data generated by a reference station from the reference station without using reference station data distribution server 30'.

Reference station data distribution server 30' transmits correction data for performing RTK processing and measuring a position of positioning terminal 10' to host server 20'.

### <Configuration of Positioning Terminal>

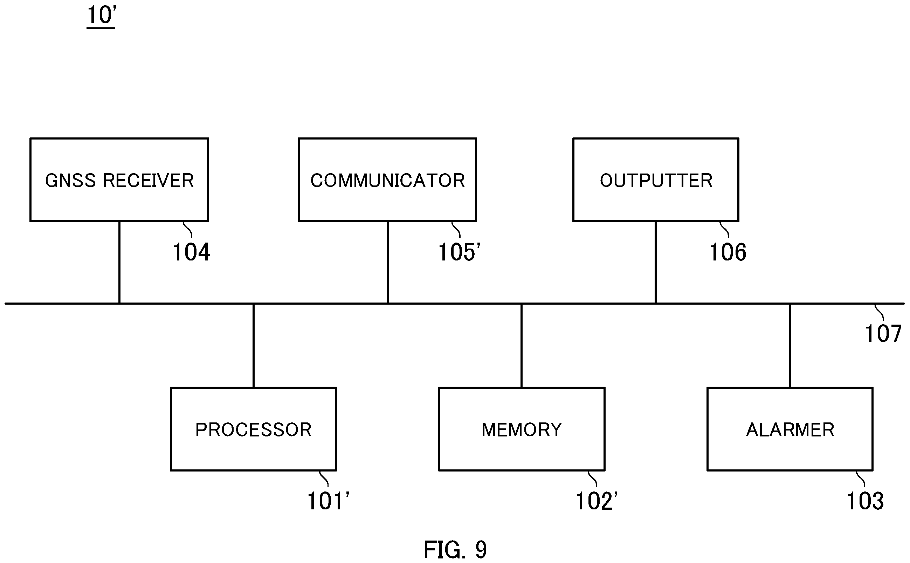

FIG. 9 is a block diagram illustrating an example of configuration of positioning terminal 10' according to Embodiment 2. As illustrated in FIG. 9, positioning terminal 10' includes processor 101', memory 102', alarmer 103, GNSS receiver 104, communicator 105', outputter 106, and bus 107.

As described above, positioning terminal 10' does not perform positioning based on RTK processing. Each time a satellite signal is received from a GNSS satellite, therefore, processor 101' generates positioning terminal positioning data on the basis of the satellite signal and outputs the positioning terminal positioning data to memory 102' and communicator 105'.

Memory 102' need not store correction data from reference station data distribution server 30'. Memory 102' stores positioning terminal positioning data.

Each time a satellite signal is received from a GNSS satellite, communicator 105' transmits positioning terminal positioning data input from processor 101' to host server 20'. Communicator 105' may receive a positioning result of positioning terminal 10' transmitted from host server 20' and output the received positioning result to memory 102'.

Processor 101', memory 102', alarmer 103, GNSS receiver 104, communicator 105', and outputter 106 are communicably connected to one another through bus 107.

### <Configuration of Host Server>

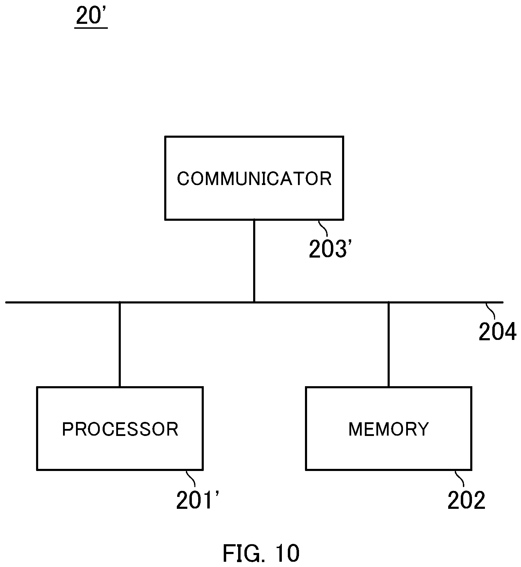

FIG. 10 is a block diagram illustrating an example of configuration of host server 20' according to Embodiment 2. As illustrated in FIG. 10, host server 20' includes processor 201', memory 202, communicator 203', and bus 204.

Unlike in Embodiment 1, for example, each time positioning terminal positioning data is received from positioning terminal 10', processor 201' performs RTK processing and measures (determines) a position, velocity, acceleration, and a travel direction of positioning terminal 10' on the basis of the positioning terminal positioning data and correction data received from reference station data distribution server 30'. Processor 201' outputs a positioning result obtained in this manner to communicator 203' and memory 202. Processor 201' predicts, on the basis of the obtained positioning result and a set dangerous area, a time at which positioning terminal 10' will enter the dangerous area (i.e., a predicted time at which positioning terminal 10' will reach the dangerous area).

Processor 201' automatically sets a dangerous area on the basis of at least a positioning result of positioning terminal 10', the congestion determination distance, the congestion determination number, an overweight detection target area, a total value of weights, or the overweight determination threshold. Processor 201' then determines approach and entry of positioning terminal 10' to the dangerous area (detects an alarm event) on the basis of the positioning result of positioning terminal 10', a position of the dangerous area, and at least the predicted entry time threshold or the non-alarm distance threshold.

Processor 201' transmits information such as the set dangerous area, the positioning result of positioning terminal 10', and positioning terminal 10' to which an alarm output instruction is to be transmitted to monitor device 40 through communicator 203' to display the information.

Communicator 203' receives positioning terminal positioning data transmitted from positioning terminal 10'. Communicator 203' outputs the positioning terminal positioning data to processor 201' and memory 202. Communicator 203' may transmit a positioning result to positioning terminal 10'. Communicator 203' receives correction data transmitted from reference station data distribution server 30'. Communicator 203' outputs the correction data to processor 201' and memory 202.

Processor 201', memory 202, and communicator 203' are communicably connected to one another through bus 204.

### <Operation of Alarm System>

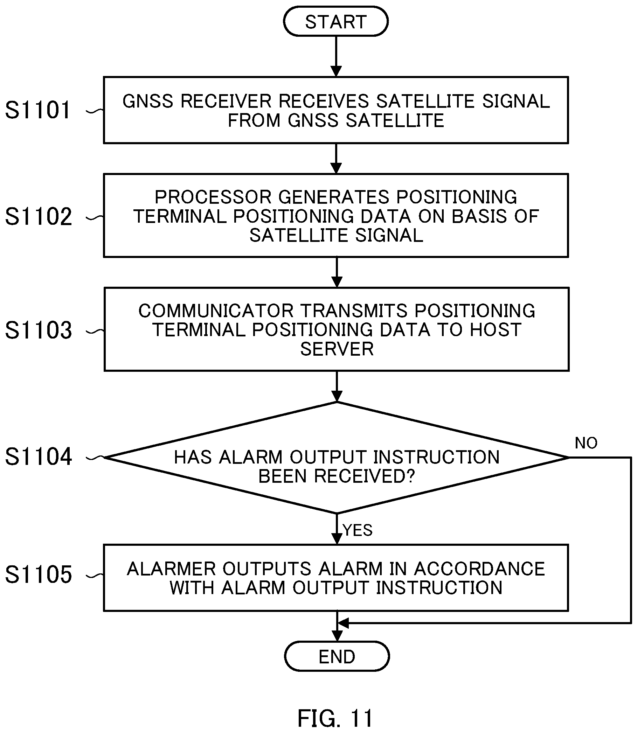

Next, examples of operation of alarm system 1' according to Embodiment 2 will be described with reference to FIGS. 11, 12A to 12C, and 13A to 13C.

### [Operation of Positioning Terminal]

FIG. 11 is a diagram illustrating an example of operation of positioning terminal 10' according to Embodiment 2.

In step S1101, GNSS receiver 104 receives a satellite signal transmitted from a GNSS satellite.

In step S1102, processor 101' generates positioning terminal positioning data on the basis of the satellite signal.

In step S1103, communicator 105' transmits the positioning terminal positioning data to host server 20'.

In step S1104, processor 101' or communicator 105' determines whether communicator 105' has received an alarm output instruction (e.g., within a certain period of time since the transmission of the positioning terminal positioning data).

If communicator 105' has received an alarm output instruction (e.g., within the certain period of time since the transmission of the positioning terminal positioning data) (YES in step S1104), alarmer 103 outputs, in step S1105, an alarm in a style specified (determined) by host server 20'. The flow then ends.

If communicator 105' has not received an alarm output instruction (e.g., within the certain period of time since the transmission of the positioning terminal positioning data) (NO in step S1104), on the other hand, the flow ends.

The process in FIG. 11 is then repeated.

### [Operation of Host Server]

A process relating to registration and setting by host server 20' is the same as the process already described with reference to FIG. 5, and description thereof is omitted here.

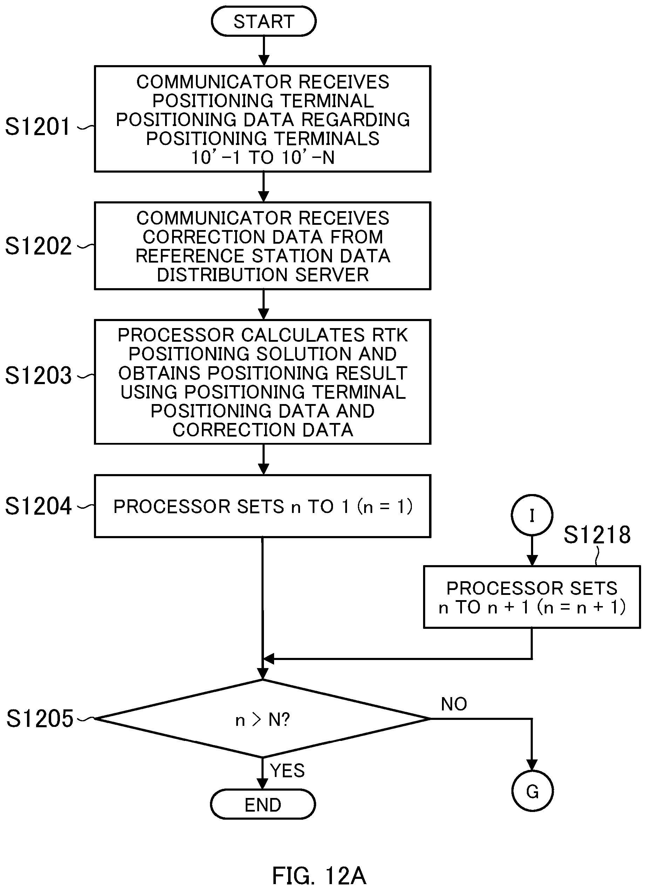

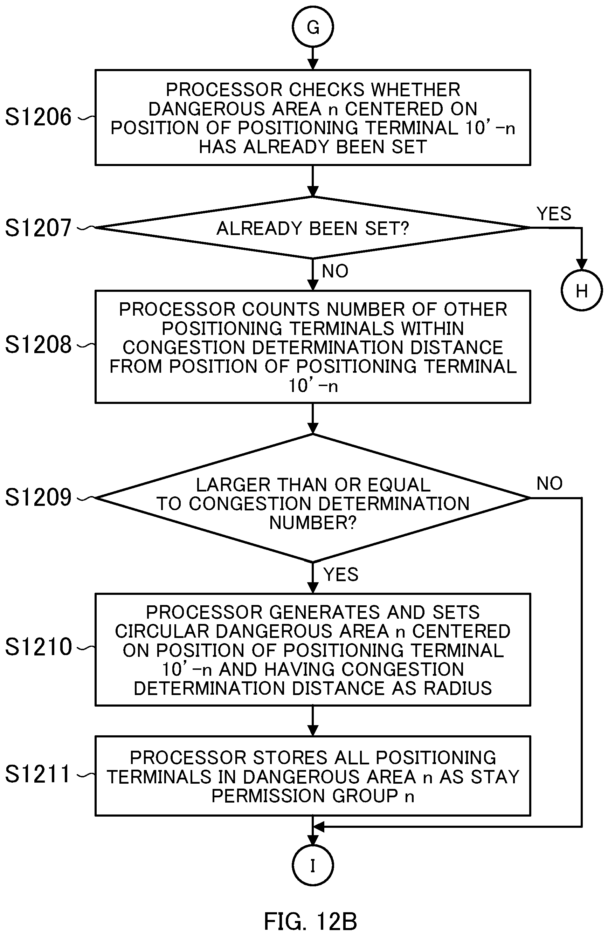

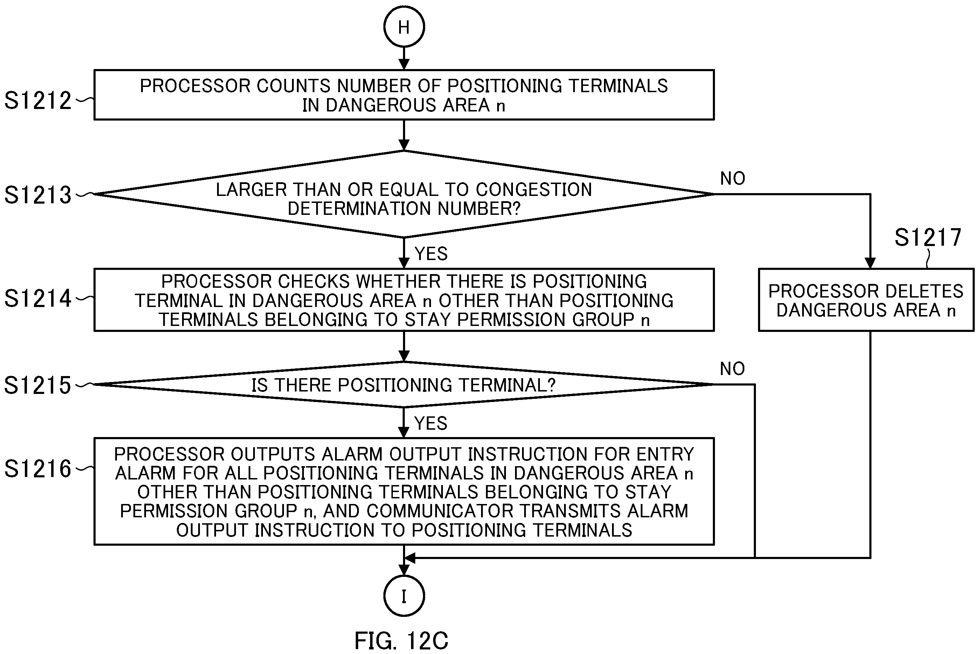

FIGS. 12A to 12C are diagrams illustrating an example of operation of host server 20' according to Embodiment 2. An example of operation of host server 20' will be described hereinafter while assuming that all positioning terminals 10' (positioning terminals 10'-1 to 10'-N) are present in a congestion detection target area and taking entry of positioning terminal 10' into a dangerous area as an example.

In step S1201, communicator 203' receives positioning terminal positioning data regarding positioning terminals 10' (N (N is an integer larger than or equal to 2) positioning terminals 10'-1 to 10'-N in this example) transmitted from positioning terminals 10'-1 to 10'-N.

In step S1202, communicator 203' receives correction data transmitted from reference station data distribution server 30'.

In step S1203, processor 201' performs RTK processing using the positioning terminal positioning data and the correction data to calculate an RTK positioning solution and obtain a positioning result.

In step S1204, processor 201' sets variable n to 1 (n = 1).

In step S1205, processor 201' determines whether the value set as variable n is larger than N (determines whether n > N).

If the value set as variable n is larger than N (YES in step S1205), the flow ends.

If the value set as variable n is not larger than N (NO in step S1205), on the other hand, the flow proceeds to step S1206. If step S1205 is performed after step S1204, n (= 1) ≤ N (an integer larger than or equal to 2), and the flow proceeds to step S1206.

In step S1206, processor 201' checks whether dangerous area n centered on a position (coordinates) of positioning terminal 10'-n has already been set (stored in memory 202).

If, as a result of the check, dangerous area n has not been set yet (NO in step S1207), processor 201' counts, in step S1208, the number of other positioning terminals present within the congestion determination distance from the position of positioning terminal 10'-n on the basis of the positioning results of positioning terminals 10'-1 to 10'-N received in step S1203.

In step S1209, processor 201' determines whether the number of other positioning terminals counted is larger than or equal to the congestion determination number.

If the number of other positioning terminals counted is larger than or equal to the congestion determination number (YES in step S1209), processor 201' determines, in step S1210, to set a dangerous area and generates and sets circular dangerous area n centered on the position of positioning terminal 10'-n and having the congestion determination distance as a radius thereof. Dangerous area n is an example of the "specific area including positions of a plurality of terminals set in accordance with the positions" in the present disclosure. A possibility of a contact, a collision, or an accident can thus be reduced by setting a dangerous area in a congested state.

In step S1211, processor 201' stores, in memory 202 as stay permission group n, all positioning terminals in dangerous area n on the basis of the positioning results of positioning terminals 10'-1 to 10'-N received in step S1203 and a position of dangerous area n. The flow then proceeds to step S1218.

If the number of other positioning terminals counted is not larger than or equal to the congestion determination number (NO in step S1209), on the other hand, the flow proceeds to step S1218.

If, as a result of the check in step S1206, dangerous area n has already been set (YES in step S1207), the flow proceeds to step S1212.

In step S1212, processor 201' counts the number of positioning terminals in dangerous area n on the basis of the positioning results of positioning terminals 10'-1 to 10'-N received in step S1203.

In step S1213, processor 201' determines whether the number of positioning terminals counted is larger than or equal to the congestion determination number.

If the number of positioning terminals counted is larger than or equal to the congestion determination number (YES in step S1213), processor 201' checks, in step S1214, whether there is a positioning terminal in dangerous area n other than the positioning terminals belonging to stay permission group n on the basis of the positioning results of positioning terminals 10'-1 to 10'-N (except for the positioning terminals belonging to stay permission group n) received in step S1203 and the position of dangerous area n.

If, as a result of the check, there is a positioning terminal in dangerous area n other than the positioning terminals belonging to stay permission group n (YES in step S1215), processor 201' outputs, in step S 1216, an alarm output instruction for an entry alarm for all positioning terminals in dangerous area n other than the positioning terminals belonging to stay permission group n. Accordingly, communicator 203' transmits the alarm output instruction to the positioning terminals. The flow then proceeds to step S1218.

If, as a result of the check, there is no positioning terminal in dangerous area n other than the positioning terminals belonging to stay permission group n (NO in step S1215), on the other hand, the flow proceeds to step S1218.

If the number of positioning terminals counted is not larger than or equal to the congestion determination number in step S1213 (NO in step S1213), processor 201' determines, in step S1217, to cancel the setting of dangerous area n, and deletes set dangerous area n (stored in memory 202). Processor 201' also deletes stay permission group n. Excessive output of alarms can thus be suppressed by cancelling setting of a dangerous area that is no longer in a congested state (a possibility of a contact, a collision, or an accident has decreased). The flow then proceeds to step S1218.

In step S1218 after step S1209 (if NO), S1211, S1215 (if NO), S1216, or S1217, processor 201 sets variable n to n + 1 (n = n + 1). If the flow proceeds to step S1218 after the above-described series of processing steps after step S1204, processor 201' sets variable n to 2. The flow then proceeds to step S1205. The above-described processing is then repeated.

Processor 201' performs the check in step S1214 in order to determine whether to cause a positioning terminal in dangerous area n to output an alarm in accordance with whether the positioning terminal belongs to stay permission group n. If the positioning terminal in dangerous area n does not belong to stay permission group n in step S1216, processor 201' determines to cause the positioning terminal to output an alarm. If the positioning terminal in dangerous area n belongs to stay permission group n, processor 201' determines not to cause the positioning terminal to output an alarm. A possibility that confusion arises due to output of alarms at many places in a dangerous area can thus be reduced by decreasing the number of positioning terminals caused to output an alarm.

The processing illustrated in FIGS. 12A to 12C is thus repeated.

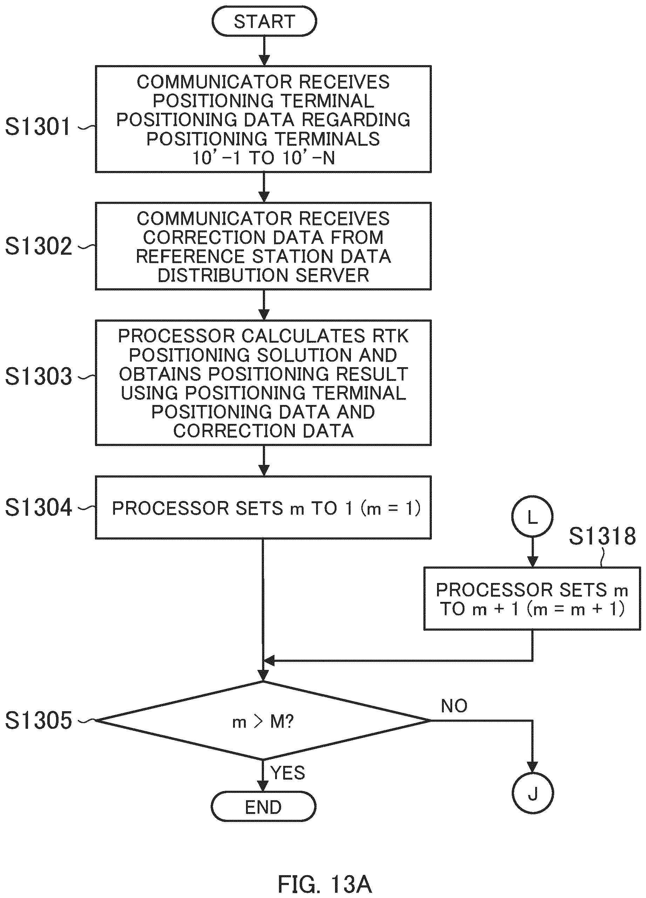

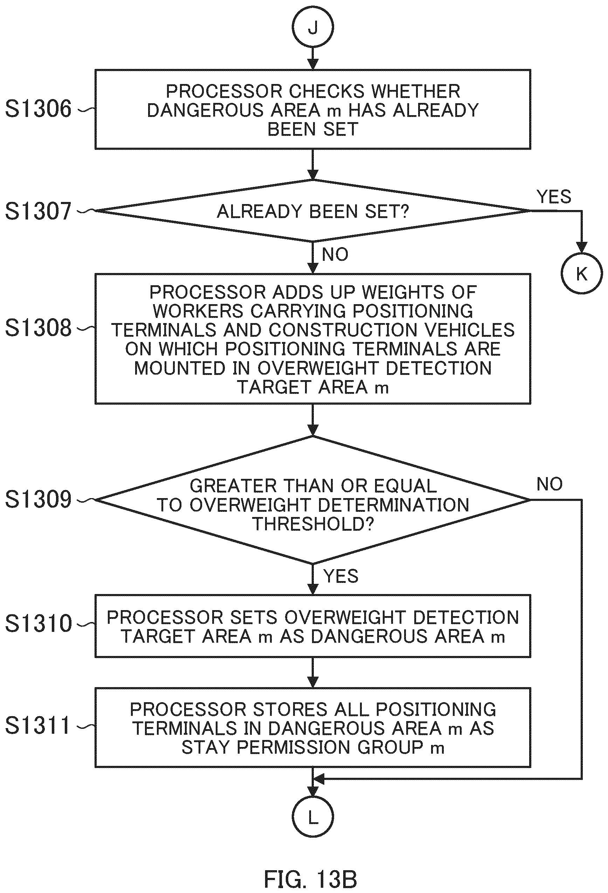

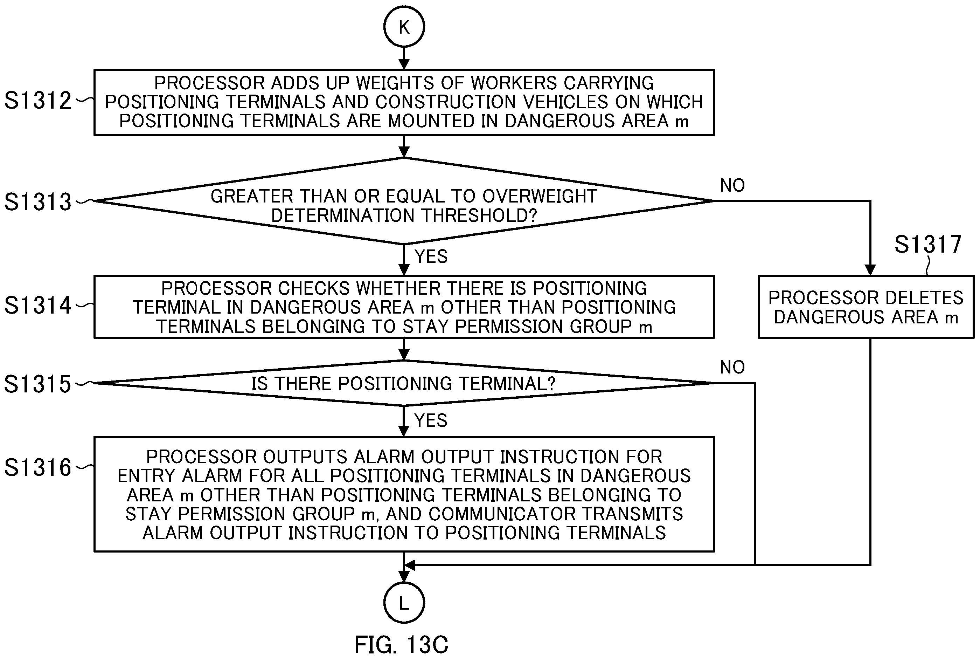

Next, yet another example of the operation of host server 20' will be described with reference to FIGS. 13A to 13C. An example of the operation of host server 20' will be described hereinafter while taking entry of positioning terminal 10' into a dangerous area as an example.

In step S1301, communicator 203' receives positioning terminal positioning data regarding positioning terminals 10' (N (N is an integer larger than or equal to 2) positioning terminals 10'-1 to 10'-N in this example) transmitted from positioning terminals 10'-1 to 10'-N.

In step S1302, communicator 203' receives correction data transmitted from reference station data distribution server 30'.

In step S1303, processor 201' performs RTK processing using the positioning terminal positioning data and the correction data to calculate an RTK positioning solution and obtain a positioning result.

In step S1304, processor 201' sets variable m to 1 (m = 1).

In step S1305, processor 201' determines whether the value set as variable n is larger than M (determines whether m > M). Here, value M indicates the number of overweight detection target areas set, and is an integer larger than or equal to 1.

If the value set as variable m is larger than M (YES in step S1305), the flow ends.

If the value set as variable m is not larger than M (NO in step S1305), on the other hand, the flow proceeds to step S1306. If step S1305 is performed after step S1304, m (= 1) ≤ M (an integer larger than or equal to 1), and the flow proceeds to step S1306.

In step S1306, processor 201' checks whether dangerous area m has already been set (stored in memory 202).

If, as a result of the check, dangerous area m has not been set yet (NO in step S1307), processor 201' adds up, in step S1308, weights of workers possessing positioning terminals and construction vehicles on which positioning terminals are mounted in overweight detection target area m on the basis of the positioning results of positioning terminals 10'-1 to 10'-N obtained in step S1303 and a position of overweight detection target area m. The "workers possessing positioning terminals in overweight detection target area m" are an example of "persons associated with terminals in an area" in the present disclosure. The "construction vehicles on which positioning terminals are mounted in overweight detection target area m" are an example of "objects associated with terminals in an area" in the present disclosure.

In step S1309, processor 201' determines whether the total weight is greater than or equal to the overweight determination threshold.

If the total weight is greater than or equal to the overweight determination threshold (YES in step S1309), processor 201' determines, in step S1310, to set a dangerous area and sets overweight detection target area m as dangerous area m. Dangerous area m is an example of the "specific area including positions of a plurality of terminals set in accordance with the positions" in the present disclosure. A possibility of a contact, a collision, or an accident can thus be reduced by setting a dangerous area in an overweight state (and accordingly a congested state), and work safety at a time when a weight limit is provided can be ensured more reliably for workers.

In step S1311, processor 201' stores, in memory 202 as stay permission group m, all positioning terminals in dangerous area m on the basis of the positioning results of positioning terminals 10'-1 to 10'-N received in step S1303 and the position of dangerous area m. The flow then proceeds to step S1318.

If the total weight is not greater than or equal to the overweight determination threshold (NO in step S1309), on the other hand, the flow proceeds to step S1318.

If, as a result of the check in step S1306, dangerous area m has already been set (YES in step S1307), the flow proceeds to step S1312.

In step S1312, processor 201' adds up weights of workers possessing positioning terminals and construction vehicles on which positioning terminals are mounted in dangerous area m on the basis of the positioning results of positioning terminals 10'-1 to 10'-N received in step S1303 and the position of dangerous area m.

In step S1313, processor 201' determines whether the total weight is greater than or equal to the overweight determination threshold.

If the total weight is greater than or equal to the overweight determination threshold (YES in step S1313), processor 201' checks, in step S1314, whether there is a positioning terminal in dangerous area m other than the positioning terminals belonging to stay permission group m on the basis of the positioning results of positioning terminals 10'-1 to 10'-N (except for the positioning terminals belonging to stay permission group m) received in step S1303 and the position of dangerous area m.

If, as a result of the check, there is a positioning terminal in dangerous area m other than the positioning terminals belonging to stay permission group m (YES in step S1315), processor 201' outputs, in step S1316, an alarm output instruction for an entry alarm for all positioning terminals in dangerous area m other than the positioning terminals belonging to stay permission group m. Accordingly, communicator 203' transmits the alarm output instruction to the positioning terminals. The flow then proceeds to step S1318.

If, as a result of the check, there is no positioning terminal in dangerous area m other than the positioning terminals belonging to stay permission group m (NO in step S1315), on the other hand, the flow proceeds to step S1318.

If the total weight is not greater than or equal to the overweight determination threshold in step S1313 (NO in step S1313), processor 201' determines, in step S1317, to cancel the setting of dangerous area m, and deletes set dangerous area m (stored in memory 202). Processor 201' also deletes stay permission group m. Excessive output of alarms can thus be suppressed by cancelling setting of a dangerous area that is no longer in an overweight state (and accordingly a congested state) (a possibility of a contact, a collision, or an accident has decreased). The flow then proceeds to step S1318.

In step S1318 after step S1309 (if NO), S1311, S1315 (if NO), S1316, or S1317, processor 201 sets variable m to m + 1 (m = m + 1). If the flow proceeds to step S1318 after the above-described series of processing steps after step S1304, processor 201' sets variable m to 2. The flow then proceeds to step S1305. The above-described processing is then repeated.

Processor 201' performs the check in step S1314 in order to determine whether to cause a positioning terminal to output an alarm in dangerous area m in accordance with whether the positioning terminal belongs to stay permission group m. If the positioning terminal in dangerous area m does not belong to stay permission group m in step S1316, processor 201' determines to cause the positioning terminal to output an alarm. If the positioning terminal in dangerous area m belongs to stay permission group m, processor 201' determines not to cause the positioning terminal to output an alarm. A possibility that confusion arises due to output of alarms at many places in a dangerous area can thus be reduced by decreasing the number of positioning terminals caused to output an alarm.

The processing illustrated in FIGS. 13A to 13C is thus repeated.

Either the processing illustrated in FIGS. 12A to 12C or the processing illustrated in FIGS. 13A to 13C may be performed independently, or the processing illustrated in FIGS. 12A to 12C and the processing illustrated in FIGS. 13A to 13C may be performed in parallel with each other (as different threads) or sequentially (when both a congestion detection target area and an overweight detection target area have been set). Alternatively, the processing illustrated in FIGS. 12A to 12C may be incorporated into the flow of the processing illustrated in FIGS. 13A to 13C, or the processing illustrated in FIGS. 13A to 13C may be incorporated into the flow of the processing illustrated in FIGS. 12A to 12C

### <Variations>

### [Variation 2-1]

In Embodiment 2, too, Variation 1-1 of Embodiment 1 may be applied.

### [Variation 2-2]

In Embodiment 2, too, Variation 1-2 of Embodiment 1 may be applied.

### [Variation 2-3]

In Embodiment 2, too, Variation 1-3 of Embodiment 1 may be applied.

### [Variation 2-4]

In Embodiment 2, too, Variation 1-4 of Embodiment 1 may be applied.

### [Variation 2-5]

In Embodiment 2, too, Variation 1-5 of Embodiment 1 may be applied.

### [Variation 2-6]

In Embodiment 2, too, Variation 1-6 of Embodiment 1 may be applied.

### [Variation 2-7]

In Embodiment 2, too, Variation 1-7 of Embodiment 1 may be applied.

### [Variation 2-8]

In Embodiment 2, too, Variation 1-8 of Embodiment 1 may be applied.

### [Variation 2-9]

In Embodiment 2, too, Variation 1-9 of Embodiment 1 may be applied.

### [Variation 2-10]

In Embodiment 2, too, Variation 1-10 of Embodiment 1 may be applied.

### [Variation 2-11]

In Embodiment 2, too, Variation 1-11 of Embodiment 1 may be applied.

### [Variation 2-12]

In Embodiment 2, too, Variation 1-12 of Embodiment 1 may be applied.

### [Variation 2-13]

In Embodiment 2, too, Variation 1-13 of Embodiment 1 may be applied.

### [Variation 2-14]

In Embodiment 2, too, Variation 1-14 of Embodiment 1 may be applied.

### [Variation 2-15]

In Embodiment 2, too, Variation 1-15 of Embodiment 1 may be applied.

### [Variation 2-16]

Although an example where host server 20' performs the processing in the present disclosure, such as the setting of a dangerous area and the determination of approach and entry to a dangerous area, has been described above, the present disclosure is not limited to this example. For example, representative positioning terminal 10' among the plurality of positioning terminals 10' may receive positioning terminal positioning data from each positioning terminal 10' and perform the processing in the present disclosure instead of host server 20', instead.

### <Effects>

According to Embodiment 2, whether to set a dangerous area is switched in accordance with the number of position terminals of positioning terminals 10' or weights of mobile objects (e.g., workers or construction vehicles associated with positioning terminals 10') in a region that is a candidate where a dangerous area is to be set (generated). As a result, since a dangerous area can be set or cancelled in accordance with an actual degree of danger, a dangerous area can be appropriately set in accordance with an actual condition (e.g., congestion and overweight).

In addition, according to Embodiment 2, since not positioning terminals 10' but host server 20' or representative positioning terminal 10' performs RTK processing for measuring positions of positioning terminals 10', a processing load of each positioning terminal 10' can be reduced.

### (Other Variations of Embodiments)

Although a position of positioning terminal 10 or 10' is calculated through RTK processing in the above-described embodiments, the position may be calculated using one of other positioning methods, instead. The other positioning methods include, for example, a conventional GPS method, in which a position of positioning terminal 10 or 10' is calculated only on the basis of a signal from a satellite, a differential GPS method, in which correction data different from data obtained through RTK processing is used, and a method in which a signal from a beacon provided nearby is used without using a signal from a satellite. In addition, a position of positioning terminal 10 or 10' may be calculated using a plurality of positioning methods, instead of using a single positioning method. For example, a method for calculating a position of positioning terminal 10 or 10' may be switched in an environment where a signal from a satellite can be stably received, such as outdoors, and an environment where quality of a signal from a satellite tends to deteriorate, such as indoors. That is, in the above-described embodiments, a position of positioning terminal 10 or 10' only needs to be calculated using a positioning method, and any positioning method may be used. RTK processing, however, can be used to calculate a more accurate position than other positioning methods in an environment where high-quality signals can be received from a satellite. It is therefore preferable to use RTK processing in an environment where there are few objects that block signals from a satellite and an error in position tends to lead to an accident, such as an outdoor construction site.

Although an entry alarm is output using a buzzer or a beep sound in the above embodiments, an entry alarm may be output in another style, instead. For example, an entry alarm may be output using another sound such as "Approaching a dangerous area". An alarm need not be a sound. When a light emitter such as an LED is mounted on positioning terminal 10 or 10', an entry alarm may be output by controlling flashing or intensity of lighting of the light emitter. When a vibrator is mounted on positioning terminal 10 or 10', an entry alarm may be output by controlling a cycle or intensity of vibration of positioning terminal 10 or 10'. A plurality of the above-described entry alarms may be combined together. When an alarm is given in a style other than a sound, intensity of the alarm may be changed by increasing the amount of light or vibration or shortening a cycle of the alarm.

Although approach to a dangerous area is determined on the basis of predicted entry time in the above embodiments, the determination may be made using another method, instead. When a current position is inside each area, for example, it may be determined that a positioning terminal has approached. Similarly, a non-alarm distance threshold need not be provided.

Although workers and construction vehicles at a work site have been described as an example in the above embodiments, the present disclosure may be applied to another environment insofar as alarms need to be output for movement of persons who possess positioning terminals 10 or 10' or vehicles including positioning terminals 10 or 10'. It is conceivable, for example, that the present disclosure is applied to firefighters and fire engines in firefighting, pedestrians and automobiles in automated driving, or the like.

In the above embodiments, a geofence is used to set, in a construction site, a dangerous area for which an alarm is output. Use of a geofence, however, is not necessarily limited to specification of a range of alarms. For example, a geofence may be used for the purpose of counting the number of positioning terminals that have entered or passed through the geofence in a general road or a commercial facility. In doing so, traffic volume can be surveyed, or information that can be used for marketing can be collected. Various other applications of a geofence are known, and the techniques in the above-described embodiments can be used in various known applications of a geofence.

### (Summary of Embodiments)

An information processing apparatus (representative positioning terminal 10 or 10' or host server 20 or 20') according to an embodiment of the present disclosure includes an obtainer (processor 101, 101', 201, or 201') that obtains a number of terminals (positioning terminals 10 or 10') in a certain area (a dangerous area or an area before a dangerous area is set) or weights of mobile objects (workers or construction vehicles) associated with terminals in the certain area and a processor (processor 101, 101', 201, or 201') that determines whether to generate a geofence (dangerous area) in accordance with whether at least one of the number of terminals and the weights of the mobile objects exceeds a certain threshold (the congestion determination number or the overweight determination threshold).

With the above configuration, whether to set a geofence is switched in accordance with the number of terminals or weights of mobile objects in a region that is a candidate where a geofence is to be set (generated). As a result, since a geofence can be set or cancelled in accordance with an actual degree of danger, a geofence can be appropriately set in accordance with an actual situation.

The information processing apparatus further includes a communicator (communicator 105, 105', 203, or 203') that transmits, to terminals in the geofence, a signal (alarm output instruction) for causing the terminals to output an alarm. The processor determines to transmit, to a terminal that is entering the geofence after the geofence is generated, the signal for causing the terminal to output an alarm.

With the above configuration, since a signal for causing a terminal to output an alarm is transmitted to a terminal that is entering an area where danger of a collision or the like has increased, the terminal (and accordingly a worker associated with the terminal, for example) can be notified of the increased danger.

In the information processing apparatus, the processor determines not to cause a terminal that has been present in the area set as the geofence before the geofence is set (positioning terminal 10 or 10' belonging to a stay permission group) to output the alarm.

With the above configuration, since a terminal that has been present in a set geofence before the geofence is set does not suddenly output an alarm, a possibility of making a person who possesses the terminal confused can be reduced. In addition, since the number of terminals caused to output an alarm is reduced, a possibility of making persons who possess terminals confused can be reduced.

In the information processing apparatus, the processor determines not to cause, among terminals that have been present in the area set as the geofence before the geofence is set, a terminal permitted in advance to stay in the area (positioning terminal 10 or 10' belonging to a stay permission group) to output the alarm and determines to cause a terminal that is not permitted to stay in the area to output the alarm.

With the above configuration, since a signal for causing a terminal to output an alarm is transmitted to a terminal that is entering an area where danger of a collision or the like has increased, the terminal (and accordingly a worker associated with the terminal, for example) can be notified of the increased danger. In addition, since a terminal that has been present in a set geofence before the geofence is set does not suddenly output an alarm, a possibility of making a person who possesses the terminal confused can be reduced. In addition, since the number of terminals caused to output an alarm is reduced, a possibility of making persons who possess terminals confused can be reduced.

In the information processing apparatus, the processor changes intensity of an alarm to be output in accordance with the number of terminals in the certain area or the weights of the mobile objects associated with the terminals in the certain area.

With the above configuration, since a more intense alarm can be output in a more dangerous case, for example, a possibility of being able to deal with a more dangerous state, for example, can be increased, and a person associated with a terminal is likely to be able to intuitively grasp a degree of danger.

In the information processing apparatus, if the number of terminals in the certain area exceeds a first threshold and the weights of the mobile objects associated with the terminals in the certain area exceed a second threshold, the processor determines to output a more intense alarm than when either one of the number of terminals and the weights of the mobile objects is smaller than or equal to corresponding one of the first threshold and the second threshold.

With the above configuration, since a more intense alarm can be output in a more dangerous case where both a congested state and an overweight state have been established than when either a congested state or an overweight state has been established, for example, a possibility of being able to deal with a more dangerous state, for example, can be increased, and a person associated with a terminal is likely to be able to intuitively grasp a degree of danger.

In the information processing apparatus, the processor changes size of the geofence in accordance with the number of terminals in the certain area or the weights of the mobile objects associated with the terminals in the certain area.

With the above configuration, since a geofence can be enlarged in a more dangerous case, for example, a possibility of being able to deal with a more dangerous state, for example, can be increased.

In the information processing apparatus, if the number of terminals in the certain area exceeds a first threshold and the weights of the mobile objects associated with the terminals in the certain area exceed a second threshold, the processor sets a larger geofence than when either one of the number of terminals and the weights of the mobile objects is smaller than or equal to corresponding one of the first threshold and the second threshold.

With the above configuration, since a geofence can be enlarged when both a congested state and an overweight state have been established compared to when either a congested state or an overweight state has been established, for example, a possibility of being able to deal with a more dangerous state, for example, can be increased.

In the information processing apparatus, if the number of terminals or the weights of the mobile objects becomes smaller than or equal to the certain threshold after the geofence is set, the processor determines to cancel the setting of the geofence.

With the above configuration, setting of a geofence is cancelled when an alarm is not necessary, output of an unnecessary alarm can be suppressed when a possibility of danger is lower.

In the information processing apparatus, the obtainer obtains identification information regarding the terminals in the certain area and obtains the weights of the mobile objects associated with the terminals in the certain area by obtaining, from information regarding weights of mobile objects stored in association with identification information regarding a plurality of terminals, information regarding the weights of the mobile objects stored in association with the obtained identification information.

With the above configuration, weights applied in a certain area need not be directly measured.

The information processing apparatus (representative positioning terminal 10 or host server 20) further includes a communicator (communicator 105 or 203) that receives, from the terminals (positioning terminals 10), positions of the terminals determined based on RTK (real-time kinematic) processing.

With the above configuration, since accurate positions of terminals can be obtained, for example, a determination as to entry into a geofence for which an alarm is to be output can be made more accurately.

In the information processing apparatus (representative positioning terminal 10' or host server 20'), the processor (processor 101' or 201') determines positions of the terminals (positioning terminals 10') based on RTK processing.

With the above configuration, since accurate positions of terminals can be obtained, for example, a determination as to entry into a geofence for which an alarm is to be output can be made more accurately.

A terminal (positioning terminal 10 or 10') according to another embodiment of the present disclosure includes a communicator (communicator 105 or 105') and an alarmer (alarmer 103). The communicator receives information indicating that the terminal has entered a geofence set based on a number of terminals (positioning terminals 10 or 10') in a certain area (a dangerous area or an area before a dangerous area is set) or weights of mobile objects associated with the terminals in the certain area. The alarmer outputs an alarm when the information is received.

With the above configuration, whether to set a geofence is switched in accordance with the number of terminals or weights of mobile objects in a region that is a candidate where a geofence is to be set, and if a geofence is set, an alarm is output in accordance with reception of information indicating entry of a terminal into the geofence. As a result, since a geofence can be set or cancelled in accordance with an actual degree of danger, a geofence can be appropriately set in accordance with an actual situation.

In the terminal, the terminal does not output the alarm if the terminal has been present in the area set as the geofence before the geofence is set, even when the terminal receives the information indicating that the terminal has entered the geofence.

With the above configuration, since sudden output of an alarm to a terminal that has been present in a set geofence before the geofence is set can be avoided, a possibility of making a person who possesses the terminal confused can be reduced.

An information processing method according to another embodiment of the present disclosure is used by an information processing apparatus (representative positioning terminal 10 or 10' or host server 20 or 20') to perform a process including obtaining a number of terminals (positioning terminals 10 or 10') in a certain area (a dangerous area or an area before a dangerous area is set) or weights of mobile objects associated with the terminals in the certain area and determining whether to generate a geofence (dangerous area) in accordance with whether at least one of the number of terminals and the weights of the mobile objects (workers or construction vehicles) exceeds a certain threshold (a congestion determination number or an overweight determination threshold).

With the above configuration, whether to set a geofence is switched in accordance with the number of terminals or weights of mobile objects in a region that is a candidate where a geofence is to be set (generated). As a result, since a geofence can be set or cancelled in accordance with an actual degree of danger, a geofence can be appropriately set in accordance with an actual situation.

An alarm method according to another embodiment of the present disclosure is used by a terminal (positioning terminal 10 or 10') to perform a process including receiving information indicating that the terminal has entered a geofence set based on a number of terminals (positioning terminals 10 or 10') in a certain area (a dangerous area or an area before a dangerous area is set) or weights of mobile objects (workers or construction vehicles) associated with the terminals in the certain area and outputting an alarm when the information is received.

With the above configuration, whether to set a geofence is switched in accordance with the number of terminals or weights of mobile objects in a region that is a candidate where a geofence is to be set, and if a geofence is set, an alarm is output in accordance with reception of information indicating entry of a terminal into the geofence. As a result, since a geofence can be set or cancelled in accordance with an actual degree of danger, a geofence can be appropriately set in accordance with an actual situation.

An information processing system (alarm system 1 or 1') according to another embodiment of the present disclosure includes a plurality of terminals (positioning terminals 10 or 10'). The information processing system obtains a number of terminals (positioning terminals 10 or 10') in a certain area (a dangerous area or an area before a dangerous area is set) and weights of mobile objects (workers or construction vehicles) associated with the terminals in the certain area and determines whether to generate a geofence (dangerous area) in accordance with whether at least one of the number of terminals and the weights of the mobile objects exceeds a certain threshold (a congestion determination number or an overweight determination threshold).

With the above configuration, whether to set a geofence is switched in accordance with the number of terminals or weights of mobile objects in a region that is a candidate where a geofence is to be set (generated). As a result, since a geofence can be set or cancelled in accordance with an actual degree of danger, a geofence can be appropriately set in accordance with an actual situation.

An information processing apparatus (representative positioning terminal 10 or 10' or host server 20 or 20') according to another embodiment of the present disclosure includes a processor (processor 101, 101', 201, or 201') that sets a specific area (dangerous area) including positions of a plurality of terminals in accordance with the positions and that determines whether to cause the terminals (positioning terminals 10 or 10') in the specific area to output an alarm and a communicator (communicator 105, 105', 203, or 203') that, if the processor determines that the terminals are to be caused to output the alarm, transmits, to the terminals, a signal (alarm output instruction) for causing the terminals to output the alarm.

With the above configuration, a specific area including positions of a plurality of terminals is set in accordance with the positions, and whether to cause the terminals in the specific area to output an alarm is determined. If it is determined that the terminals are to be caused to output the alarm, a signal for causing the terminals to output the alarm is provided for the terminals. As a result, since a plurality of terminals in a specific area set in accordance with positions thereof outputs an alarm, the terminals can appropriately output an alarm in consideration of an element (the positions of the plurality of terminals) other than distances.

In the information processing apparatus, if there are terminals more than a first threshold (congestion determination number) in the specific area, the processor determines to set the specific area.

With the above configuration, since a specific area (in a congested state) where there are terminals more than the first threshold is set, a possibility of a contact, a collision, or an accident can be reduced.

In the information processing apparatus, the processor determines, after determining to set the specific area, not to cause some of the terminals to output an alarm so that only terminals as many as the threshold will output an alarm.

With the above configuration, since the number of terminals caused to output an alarm is reduced, a possibility that confusion arises due to output of alarms at many places in a specific area can be reduced.

In the information processing apparatus, if there are terminals fewer than the first threshold in the specific area after the specific area is set, the processor cancels the setting of the specific area.

With the above configuration, since setting of a specific area where there are terminals fewer than the first threshold (no longer in a congested state; a possibility of a contact, a collision, or an accident has decreased), excessive output of alarms can be suppressed.

In the information processing apparatus, if a total value of weights of persons or objects associated with all the terminals in the specific area is larger than or equal to a second threshold (overweight determination threshold), the processor determines to set the specific area.

With the above configuration, since a specific area where there are persons/objects (and accordingly associated terminals) whose total value of weights is larger than or equal to the second threshold (in a congested state) is set, a possibility of a contact, a collision, or an accident can be reduced.

In the information processing apparatus, the processor determines not to cause all the terminals present in the specific area when determining to set the specific area to output an alarm.

With the above configuration, since the number of terminals caused to output an alarm is reduced, a possibility that a confusion arises due to output of alarms at many places in a specific area can be reduced.

In the information processing apparatus, if the total value of the weights of the persons or the objects associated with all the terminals in the specific area after the specific area is set is smaller than the second threshold, the processor determines to cancel the setting of the specific area.

With the above configuration, since setting of a specific area where there are persons/objects (and accordingly associated terminals) whose total value of weights is smaller than the second threshold (no longer in a congested state; a possibility of a contact, a collision, or an accident has decreased) is cancelled, excessive output of alarms can be suppressed.

In the information processing apparatus (representative positioning terminal 10 or host server 20), the communicator (communicator 105 or 203) receives, from the terminals (positioning terminals 10), positions of the terminals determined based on RTK (real-time kinematic) processing.

With the above configuration, since accurate positions of terminals can be obtained, for example, a determination as to entry into a specific area for which an alarm is to be output can be made more accurately.

In the information processing apparatus (representative positioning terminal 10' or host server 20'), the processor (processor 101' or 201') determines the positions of the terminals (positioning terminals 10') based on RTK processing.

With the above configuration, since accurate positions of terminals can be obtained, for example, a determination as to entry into a specific area for which an alarm is to be output can be made more accurately.

A terminal (positioning terminal 10 or 10') according to another embodiment of the present disclosure includes a communicator (communicator 105 or 105') and an alarmer (alarmer 103). If an information processing apparatus (representative positioning terminal 10 or 10' or host server 20 or 20') determines to cause a plurality of terminals in a specific area (dangerous area) including positions of the terminals set in accordance with the positions to output an alarm, the communicator receives, from the information processing apparatus, a signal (alarm output instruction) for causing the terminal to output the alarm, and the alarmer outputs the alarm in accordance with the signal.

With the above configuration, if it is determined that a plurality of terminals in a specific area including positions of the terminals set in accordance with the positions is caused to output an alarm, a signal for causing the terminals to output the alarm is provided for the terminals. As a result, since a plurality of terminals in an area set in accordance with positions thereof outputs an alarm, the terminals can appropriately output an alarm in consideration of an element (the positions of the terminals) other than distances.

In the terminal, if the information processing apparatus determines to transmit the positions of the terminals determined based on RTK (real-time kinematic) processing thereto and cause the terminals to output the alarm based on the positions of the terminals, the communicator receives the signal from the information processing apparatus.

With the above configuration, since accurate positions of terminals can be obtained, a determination as to entry into a specific area for which an alarm is to be output can be made more accurately.

An information processing method according to another embodiment of the present disclosure is used by an information processing apparatus (representative positioning terminal 10 or 10' or host server 20 or 20') to perform a processing including setting a specific area (dangerous area) including positions of a plurality of terminals set in accordance with the positions, determining whether to cause the terminals (positioning terminals 10 or 10') in the specific area to output an alarm, and, if determining that the terminals are caused to output an alarm, transmitting, to the terminals, a signal (alarm output instruction) for causing the terminals to output the alarm.

With the above configuration, a specific area including positions of a plurality of terminals is set in accordance with the positions, and whether to cause the terminals in the specific area to output an alarm is determined. If it is determined that the terminals are to be caused to output the alarm, a signal for causing the terminals to output the alarm is provided for the terminals. As a result, since a plurality of terminals in a specific area set in accordance with positions thereof outputs an alarm, the terminals can appropriately output an alarm in consideration of an element (the positions of the plurality of terminals) other than distances.

An alarm method according to another embodiment of the present disclosure is used by a terminal (positioning terminal 10 or 10') to perform a process including receiving, if an information processing apparatus (representative positioning terminal 10 or 10' or host server 20 or 20') determines to cause a plurality of terminals in a specific area (dangerous area) including positions of the terminals set in accordance with the positions to output an alarm, a signal (alarm output instruction) for causing the terminals to output the alarm from the information processing apparatus and outputting the alarm in accordance with the signal.

With the above configuration, if it is determined that a plurality of terminals in a specific area including positions of the terminals set in accordance with the positions is to be caused to output an alarm, a signal for causing the terminals to output the alarm is provided for the terminal. As a result, since terminals in a specific area set in accordance with positions of a plurality of terminals output an alarm, the terminals can appropriately output an alarm in consideration of an element (the positions of the terminals) other than distances.

An alarm system (alarm system 1 or 1') according to another embodiment of the present disclosure includes a first terminal (positioning terminal 10 or 10') and a second terminal (positioning terminal 10 or 10'). The alarm system sets a specific area (dangerous area) including positions of a plurality of terminals in accordance with the positions and determines whether to cause the first terminal and the second terminal in the specific area to output an alarm. The first terminal outputs the alarm in accordance with the determination, and the second terminal outputs or does not output the alarm in accordance with the determination.

With the above configuration, a specific area including positions of a plurality of terminals is set in accordance with the positions, and whether to cause a first terminal and a second terminal in the specific area to output an alarm is determined. The first terminal the outputs the alarm in accordance with the determination, and the second terminal outputs or does not output the alarm. As a result, since at least a first terminal in a specific area set in accordance with positions of a plurality of terminals outputs an alarm, the terminal can appropriately output the alarm in consideration of an element (the positions of the plurality of terminals) other than distances.

Further, any component termed with a suffix, such as "-er," "-or," or "-ar" in the present disclosure may be replaced with another term such as "circuit (circuitry)," "assembly," "device," "unit," or "module."

Although the embodiments have been described above with reference to the accompanying drawings, the present disclosure is not limited to such examples. It is obvious that a person skilled in the art can arrive at various variations and modifications within the scope described in the claims. It is understood that such variations and modifications also belong to the technical scope of the present disclosure as a matter of fact. Further, components in the embodiments described above may be arbitrarily combined without departing from the spirit of the present disclosure.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, an FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

When future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as, e.g., a base station, an access point, and any other apparatus, device or system that communicates with or controls apparatuses such as those in the above non-limiting examples.

The entire contents disclosed in the specification, the drawings, and the abstract contained in Japanese Patent Application No. 2022-019897 filed on February 10, 2022 are hereby incorporated herein by reference.

### Industrial Applicability

An embodiment of the present disclosure is effective in a geofence technique for setting an area defined by a virtual boundary line.

### Reference Signs List

1, 1' alarm system
10, 10' positioning terminal
20, 20' host server
30, 30' reference station data distribution server
40 monitor device
101, 101', 201, 201' processor
102, 102', 202 memory
103 alarmer
104 GNSS receiver
105, 105', 203, 203' communicator
106 outputter
107, 204 bus

## Claims

1. An information processing apparatus, comprising:
an obtainer that obtains a number of terminals in a certain area or weights of mobile objects associated with terminals in the certain area; and
a processor that determines whether to generate a geofence in accordance with whether at least one of the number of terminals and the weights of the mobile objects exceeds a certain threshold.

2. The information processing apparatus according to claim 1, further comprising:
a communicator that transmits, to a terminal in the geofence, a signal for causing the terminal to output an alarm, wherein:
the processor determines to transmit, to a terminal that enters the geofence after the geofence is generated, the signal for causing the terminal to output an alarm.

3. The information processing apparatus according to claim 2, wherein:
the processor determines not to cause a terminal that has been present in the area set as the geofence before the geofence is set to output the alarm.

4. The information processing apparatus according to claim 2, wherein:
the processor determines not to cause, among terminals that have been present in the area set as the geofence before the geofence is set, a terminal permitted in advance to stay in the area to output the alarm and determines to cause a terminal that is not permitted to stay in the area to output the alarm.

5. The information processing apparatus according to claim 2, wherein:
the processor changes intensity of an alarm to be output in accordance with the number of terminals in the certain area or the weights of the mobile objects associated with the terminals in the certain area.

6. The information processing apparatus according to claim 2, wherein:
when the number of terminals in the certain area exceeds a first threshold and the weights of the mobile objects associated with the terminals in the certain area exceed a second threshold, the processor determines to output a more intense alarm than when either one of the number of terminals and the weights of the mobile objects is smaller than or equal to corresponding one of the first threshold and the second threshold.

7. The information processing apparatus according to claim 1, wherein:
the processor changes size of the geofence in accordance with the number of terminals in the certain area or the weights of the mobile objects associated with the terminals in the certain area.

8. The information processing apparatus according to claim 1, wherein:
when the number of terminals in the certain area exceeds a first threshold and the weights of the mobile objects associated with the terminals in the certain area exceed a second threshold, the processor sets a larger geofence than when either one of the number of terminals and the weights of the mobile objects is smaller than or equal to corresponding one of the first threshold and the second threshold.

9. The information processing apparatus according to claim 1, wherein:
when the number of terminals or the weights of the mobile objects becomes smaller than or equal to the certain threshold after the geofence is set, the processor determines to cancel the setting of the geofence.

10. The information processing apparatus according to claim 1, wherein:
the obtainer obtains identification information regarding the terminals in the certain area and obtains the weights of the mobile objects associated with the terminals in the certain area by obtaining, from information regarding weights of mobile objects stored in association with identification information regarding a plurality of terminals, information regarding the weights of the mobile objects stored in association with the obtained identification information.

11. The information processing apparatus according to claim 1, further comprising:
a communicator that receives, from the terminals, positions of the terminals determined based on RTK (real-time kinematic) processing.

12. The information processing apparatus according to claim 1, wherein:
the processor determines positions of the terminals based on RTK processing.

13. A terminal, comprising:
a communicator that receives information indicating that the terminal has entered a geofence set based on a number of terminals in a certain area or weights of mobile objects associated with the terminals in the certain area; and
an alarmer that outputs an alarm when the information is received.

14. The terminal according to claim 13,
wherein the terminal does not output the alarm when the terminal has been present in the area set as the geofence before the geofence is set, even when the terminal receives the information indicating that the terminal has entered the geofence.

15. An information processing method, comprising:
obtaining, by an information processing apparatus, a number of terminals in a certain area or weights of mobile objects associated with the terminals in the certain area; and
determining, by the information processing apparatus, whether to generate a geofence in accordance with whether at least one of the number of terminals and the weights of the mobile objects exceeds a certain threshold.

16. An alarm method, comprising:
receiving, by a terminal, information indicating that the terminal has entered a geofence set based on a number of terminals in a certain area or weights of mobile objects associated with the terminals in the certain area; and
outputting, by the terminal, an alarm when the information is received.

17. An information processing system, comprising:
a plurality of terminals, wherein:
the information processing system obtains a number of terminals in a certain area and weights of mobile objects associated with the terminals in the certain area and determines whether to generate a geofence in accordance with whether at least one of the number of terminals and the weights of the mobile objects exceeds a certain threshold.
